# EUROPEAN PATENT APPLICATION

(11) **EP 4 664 806 A1**
(43) Date of publication of application: **17.12.2025**
(21) Application number: 23920487.8
(22) Date of filing: 09.02.2023
(51) Int. Cl.: H04L 5/00

(54) **TRANSMISSION METHOD FOR UPLINK PHASE TRACKING REFERENCE SIGNAL (PTRS) AND COMMUNICATION APPARATUS**

(71) Applicant: Beijing Xiaomi Mobile Software Co., Ltd., Beijing 100085 (CN)
(72) Inventor: GAO, Xueyuan, Beijing 100085 (CN)
(74) Representative: Gunzelmann, Rainer
(86) International application number: PCT/CN2023/075297
(87) International publication number: WO 2024/164279

(57) **Abstract**

The present disclosure provides a transmission method for uplink phase tracking reference signal (PTRS) and a communication apparatus, applicable to mobile communication technology. The method comprises: under the configuration of uplink simultaneously transmission across multiple panels (STxMP), when a PUSCH is scheduled for non-codebook-based SDM transmission, determining an uplink PTRS transmission parameter on the basis of received configuration information, wherein the PTRS transmission parameter comprises the number of actual sending ports of the PTRS and a DMRS port actually associated with each PTRS port, and different PTRS ports are associated with different DMRS ports; and on the basis of an uplink PTRS transmission parameter, sending a PTRS to a network device, thereby achieving reliable transmission of the PTRS.

## Description

### FIELD

The present disclosure relates to the field of communication technology, in particular to a transmission method for an uplink Phase Tracking Reference Signal (PTRS) and a communication apparatus.

### BACKGROUND

In uplink enhancement of Release 18 (R18), uplink simultaneous transmission through multi-panel and/or multiple Transmission Reception Point (multi-TRP) is considered to support higher throughput and more reliable transmission performance. In order to support an uplink Simultaneous Transmission from Multiple Panels (STxMP) scheme based on single Downlink Control Information (DCI), the reliable transmission of a PTRS needs to be taken into consideration under different transmission multiplexing schemes, so as to support accurate estimation on a Common Phase Error (CPE) in a case of multiple-panels for a terminal.

### SUMMARY

In a first aspect, the present disclosure provides in some embodiments a transmission method for an uplink PTRS, executed by a terminal device, including: under a configuration of uplink STxMP, in a case that a network device schedules a Physical Uplink Shared Channel (PUSCH) for non-codebook-based Space Division Multiplexing (SDM) transmission, determining an uplink PTRS transmission parameter based on received configuration information, the PTRS transmission parameter including a number of actual transmission ports of the PTRS and a Demodulation Reference Signal (DMRS) port actually associated with each PTRS port, and different PTRS ports being associated with different DMRS ports; and sending the PTRS to the network device based on the uplink PTRS transmission parameter.

In a second aspect, the present disclosure provides in some embodiments a transmission method for an uplink PTRS, executed by a network device, including: under a configuration of uplink STxMP of a terminal device, in a case that a PUSCH is scheduled for non-codebook-based SDM transmission, determining an uplink PTRS transmission parameter of the terminal device based on configuration information sent to the terminal device, where the PTRS transmission parameter includes a number of actual transmission ports of the PTRS and a DMRS port actually associated with each PTRS port, and different PTRS ports are associated with different DMRS ports; and receiving the PTRS sent by the terminal device based on the uplink PTRS transmission parameter.

In a third aspect, the present disclosure provides in some embodiments a communication apparatus, including: a processing module configured to, under a configuration of uplink STxMP, in a case that a network device schedules a PUSCH for non-codebook-based SDM transmission, determine an uplink PTRS transmission parameter based on received configuration information, where the PTRS transmission parameter includes a number of actual transmission ports of the PTRS and a DMRS port actually associated with each PTRS port, and different PTRS ports are associated with different DMRS ports; and a transceiving module configured to send the PTRS to the network device based on the uplink PTRS transmission parameter.

In a fourth aspect, the present disclosure provides in some embodiments a communication apparatus, including: a processing module configured to, under a configuration of uplink STxMP of a terminal device, in a case that a PUSCH is scheduled for non-codebook-based SDM transmission, determine an uplink PTRS transmission parameter of the terminal device based on configuration information sent to the terminal device, where the PTRS transmission parameter includes a number of actual transmission ports of the PTRS and a DMRS port actually associated with each PTRS port, and different PTRS ports are associated with different DMRS ports; and a transceiving module configured to receive the PTRS sent by the terminal device based on the uplink PTRS transmission parameter.

In a fifth aspect, the present disclosure provides in some embodiments a communication apparatus, including a processor. The processor is configured to call a computer program in a memory to implement the above-mentioned transmission method in the first aspect.

In a sixth aspect, the present disclosure provides in some embodiments a communication apparatus, including a processor. The processor is configured to call a computer program in a memory to implement the above-mentioned transmission method in the second aspect.

In a seventh aspect, the present disclosure provides in some embodiments a communication apparatus, including a processor and a memory. The memory is configured to store therein a computer program, and the processor is configured to execute the computer program in the memory to implement the above-mentioned transmission method in the first aspect.

In an eighth aspect, the present disclosure provides in some embodiments a communication apparatus, including a processor and a memory. The memory is configured to store therein a computer program, and the processor is configured to execute the computer program in the memory to implement the above-mentioned transmission method in the second aspect.

In a ninth aspect, the present disclosure provides in some embodiments a communication apparatus, including a processor and an interface circuit. The interface circuit is configured to receive a code instruction and transmit it to the processor, and the processor is configured to execute the code instruction to implement the above-mentioned transmission method in the first aspect.

In a tenth aspect, the present disclosure provides in some embodiments a communication apparatus, including a processor and an interface circuit. The interface circuit is configured to receive a code instruction and transmit it to the processor, and the processor is configured to execute the code instruction to implement the above-mentioned transmission method in the second aspect.

In an eleventh aspect, the present disclosure provides in some embodiments a communication system, including the above-mentioned communication apparatus in the third and fourth aspects, or including the above-mentioned communication apparatus in the fifth and sixth aspects, or including the above-mentioned communication apparatus in the seventh and eighth aspects, or including the above-mentioned communication apparatus in the ninth and tenth aspects.

In a twelfth aspect, the present disclosure provides in some embodiments a computer-readable storage medium storing therein an instruction for the above-mentioned apparatus. The instruction is executed so that the communication apparatus implement the above-mentioned transmission method in the first aspect.

In a thirteenth aspect, the present disclosure provides in some embodiments a computer-readable storage medium storing therein an instruction for the above-mentioned apparatus. The instruction is executed so that the communication apparatus implement the above-mentioned transmission method in the second aspect.

In a fourteenth aspect, the present disclosure provides in some embodiments a computer program product including a computer program. The computer program is executed by a computer to implement the above-mentioned transmission method in the first aspect.

In a fifteenth aspect, the present disclosure provides in some embodiments a computer program product including a computer program. The computer program is executed by a computer to implement the above-mentioned transmission method in the second aspect.

In a sixteenth aspect, the present disclosure provides in some embodiments a chip system, including at least one processor and an interface. The chip system is configured to support a communication apparatus to achieve functions involved in the first aspect, e.g., determining or processing at least one of data or information involved in the above method. In a possible design, the chip system further includes a memory configured to store therein a computer program and data desired for the communication apparatus. The chip system includes a chip, or includes a chip and other discrete elements.

In a seventeenth aspect, the present disclosure provides in some embodiments a chip system, including at least one processor and an interface. The chip system is configured to support a communication apparatus to achieve functions involved in the second aspect, e.g., determining or processing at least one of data or information involved in the above method. In a possible design, the chip system further includes a memory configured to store therein a computer program and data desired for the communication apparatus. The chip system includes a chip, or includes a chip and other discrete elements.

In an eighteenth aspect, the present disclosure provides in some embodiments a computer program. The computer program is executed by a computer to implement the above-mentioned transmission method in the first aspect.

In a nineteenth aspect, the present disclosure provides in some embodiments a computer program. The computer program is executed by a computer to implement the above-mentioned transmission method in the second aspect.

### BRIEF DESCRIPTION OF THE DRAWINGS

In order to illustrate the technical solutions in the embodiments of the present disclosure or the background in a clearer manner, the drawings desired for the embodiments of the present disclosure or the background will be described hereinafter briefly.
FIG. 1 is a schematic view showing architecture of a communication system according to an embodiment of the present disclosure;
FIG. 2 is a flow chart of a transmission method for an uplink PTRS according to an embodiment of the present disclosure;
FIG. 3 is another flow chart of the transmission method for the uplink PTRS according to an embodiment of the present disclosure;
FIG. 4 is yet another flow chart of the transmission method for the uplink PTRS according to an embodiment of the present disclosure;
FIG. 5 is still yet another flow chart of the transmission method for the uplink PTRS according to an embodiment of the present disclosure;
FIG. 6 is still yet another flow chart of the transmission method for the uplink PTRS according to an embodiment of the present disclosure;
FIG. 7 is a flow chart of a transmission method for an uplink PTRS according to an embodiment of the present disclosure;
FIG. 8 is another flow chart of the transmission method for the uplink PTRS according to an embodiment of the present disclosure;
FIG. 9 is yet another flow chart of the transmission method for the uplink PTRS according to an embodiment of the present disclosure;
FIG. 10 is still yet another flow chart of the transmission method for the uplink PTRS according to an embodiment of the present disclosure;
FIG. 11 is still yet another flow chart of the transmission method for the uplink PTRS according to an embodiment of the present disclosure;
FIG. 12 is a schematic view showing a communication apparatus according to an embodiment of the present disclosure;
FIG. 13 is a schematic view showing another communication apparatus according to an embodiment of the present disclosure; and
FIG. 14 is a schematic view showing a chip according to an embodiment of the present disclosure.

### DETAILED DESCRIPTION

In order to understand a transmission method for an uplink PTRS and an apparatus in the embodiments of the present disclosure in a better manner, an applicable communication system will be described hereinafter at first.

It should be appreciated that, the word "include" in the embodiments of the present disclosure refers to "directly include" or "indirectly indicate". For example, in a case that A includes B, it means that A directly includes B, or some information in A indirectly indicates B, which will not be particularly defined herein.

In addition, such expressions as "first SRS resource set" and "second SRS resource set" in the embodiments of the present disclosure are merely used to differentiate the resource sets, and the word "first" and "second" are not used to represent index numbers of the SRS resource sets.

In the embodiments of the present disclosure, PTRS is also called as PT-RS.

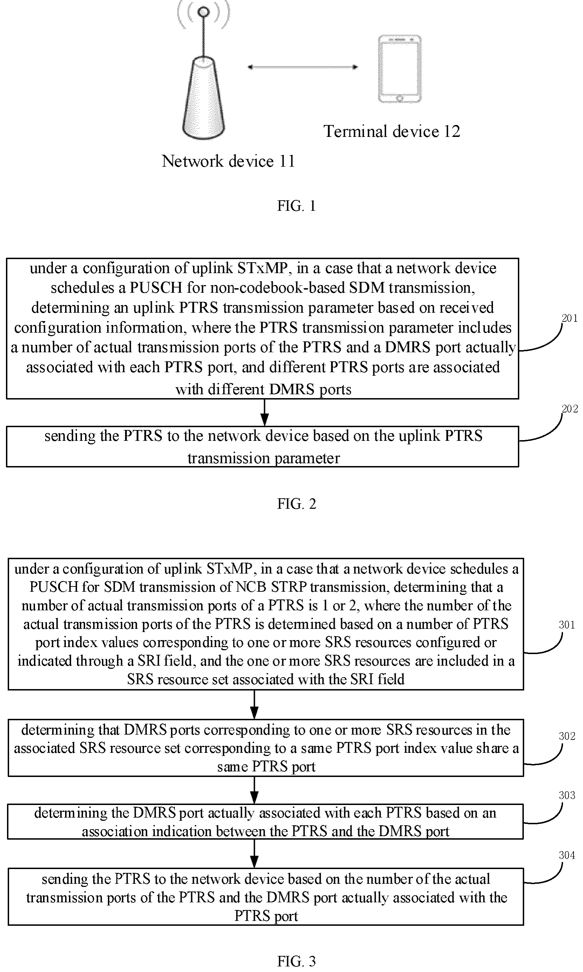

Referring to FIG. 1 which is a schematic view showing architecture of a communication system according to an embodiment of the present disclosure, the communication system includes, but not limited to, one network device and one terminal device. Quantities and forms of the devices in FIG. 1 are for illustrative purposes only, but shall not be construed as limiting the embodiments of the present disclosure. In actual use, the communication system may include two or more network devices and two or more terminal devices. In the communication system as shown in FIG. 1, one network device 11 and one terminal device 12 are taken as an example.

It should be appreciated that, the technical solutions in the embodiments of the present disclosure may be applied to various communication systems, e.g., a Long Term Evolution (LTE) system, a 5^{th}-Generation (5G) mobile communication system, a 5G New Radio (NR) system, or any new mobile communication system that may occur in the future.

In the embodiments of the present disclosure, the network device 11 is an entity at an access network side for sending or receiving a signal. For example, the network device 11 is an evolved NodeB (eNB), a Transmission Reception Point (TRP), a next generation NodeB (gNB) in the NR system, a base station in the future mobile communication system, or an access point in a Wireless Fidelity (WiFi) system. A specific technology adopted by the network device and a specific device form thereof will not be particularly defined herein. The access network device in the embodiments of the present disclosure may consist of a Central Unit (CU) and a Distributed Unit (DU), and the CU may also be called as control unit. Through the CU-DU structure, a protocol layer for the network device, e.g., a base station, is divided, i.e., a part of functions of the protocol layer are centrally controlled by the CU, a part of, or all of, the remaining functions of the protocol layer are distributed in the DU, and the DU is controlled by the CU.

In the embodiments of the present disclosure, the terminal device 12 is an entity at a user side for receiving or sending a signal and having an Internet of Things function, e.g., a mobile phone, a wearable device, a smart home device, or a smart office device. The terminal device may also be called as terminal, User Equipment (UE), Mobile Station (MS), Mobile Terminal (MT), etc. The terminal device may be a vehicle having a communication function, a smart vehicle, a mobile phone, a wearable device, a pad, a computer having a wireless transceiver function, a Virtual Reality (VR) terminal device, an Augmented Reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. In the embodiments of the present disclosure, a specific technology adopted by the terminal device and a specific device form thereof will not be particularly defined.

It should be appreciated that, the communication system described herein is used to describe the technical solutions in the embodiments of the present disclosure in a clearer manner, but shall not be construed as limiting the technical solutions. It is obvious for a person skilled in the art that, along with the evolution of the system architecture as well as the emergence of new service scenarios, the technical solutions are also applicable to similar technical problems.

In the related art, in a multi-TRP scenario, for the repeated transmission of a Physical Uplink Shared Channel (PUSCH), uplink enhancement supports to send an uplink channel to different TRPs in different uplink beam directions using a Time Division Multiplexing (TDM) mode.

Currently, a bottleneck for the communication system still exists in an uplink transmission rate and coverage, so for system enhancement in R18, uplink simultaneous transmission is mainly considered to be performed using multi-panel terminal device in the multi-TRP scenario to improve the uplink rate and further improve the transmission reliability. The transmission is scheduled based on one DCI carried in a Physical Downlink Control Channel (PDCCH), or scheduled based on different DCI carried in different PDCCHs. An existing synchronous transmission scheme mainly includes that, the sending of channels for different panels is implemented based on Space Division Multiplexing (SDM) or Frequency Division Multiplexing (FDM).

The multi-panel terminal device is usually configured with a plurality of physical panels, and different panels have different capabilities, e.g., different quantities of Sounding Reference Signal (SRS) ports. In addition, supported maximum data transmission layers may be not necessarily the same. For example, one panel supports the transmission of at most two layers, and another panel supports the transmission of at most four layers. The network device determines whether the terminal device is currently adapted to the multi-panel uplink simultaneous transmission. In a case that the terminal device is currently adapted to the multi-panel uplink simultaneous transmission and the multi-panel uplink simultaneous transmission is scheduled simultaneously, the network device directly or indirectly indicates relevant transmission parameters, including specific beam indication beams about the terminal device, the quantity of data layers used for the transmission, an assignment situation of used DMRS ports, and pre-coded indication information, etc.

In addition, uplink M-TRP-related transmission schemes of the PUSCH mainly include the followings.
1. As specified in R18, STxMP transmission schemes for supporting PUSCH based on S-DCI include an SDM scheme and a Single Frequency Network (SFN) SDM scheme.
2. In R17, M-TRP uplink transmission based on S-DCI is enhanced, and an uplink PUSCH transmission is performed toward a plurality of TRPs of a base station. In R17, coordinated transmission in a TDM transmission mode is standardized, and different repetitions of same information on the PUSCH are sent to different TRPs at a network side in a time-division manner through different Transmission Occasions (TOs) in a time domain. In this method, the terminal capability is less demanded, and the PUSCH is merely sent to one TRP at each TO, so a capability of sending beams simultaneously is not required to be supported, and a transmission delay is relatively large.
3. In R17, in non-codebook (NCB)-based and codebook-based M-TRP transmission, a SRS Resource Indicator (SRI) field in the DCI indicates SRS resources in a SRS resource set. Two SRS resource sets are supported in R17, so in the repetition of the NCB-based M-TRP PUSCH, the DCI in formats 0_1 and 0_2 includes two SRI fields associated with the two SRS resource sets, and each SRI field indicates the SRS resource set for one TRP.

A Phase Noise (PN) is generated for the reason that a Common Phase Error (CPE) is caused in a case that orthogonality of each subcarrier in an Orthogonal Frequency Division Multiplexing (OFDM) system is destroyed due to the execution of local oscillation, a modulation constellation rotates at a fixed angle, and thereby an Inter-Carrier Interference (ICI) occurs. This situation becomes more obvious at a high frequency. In a New Radio (NR) system, in order to enhance signal coverage and improve signal quality, a PTRS signal is designed to estimate the CPE. As a UE-specific reference signal, the PTRS is configured by the network device for the terminal device, and it is used to track the PN caused by the local oscillation in the network device (e.g., gNB) and the terminal device. The PTRS may be considered as an extension of a Demodulation Reference Signal (DMRS), and there is a close relationship between them, e.g., the use of same precoding, port correlation, the generation of orthogonal sequences, Quasi Co-Location (QCL) relationship, etc.

A number of PTRS ports is associated with a number of PN sources, and in a case that there is a plurality of PN sources independent of each other, one PTRS port needs to be provided to perform phase estimation on each PN source.

Whether the uplink PTRS is transmitted is also controlled through a configuration of a high-layer parameter, and in a case that no PTRS is configured for the terminal device in the high-layer parameter, e.g., DMRS uplink configuration information (DMRS-UplinkConfig), the uplink PTRS is not transmitted.

In a case that a parameter "UL-PTRS-present" is configured by the network device for the terminal device and the number of PTRS ports is 1 or 2, a PTRS-DMRS association indication field in the DCI (e.g., DCI 0_1/0_2) indicates that the PTRS port is associated with one DMRS port or one group of DMRS ports, and a specific association relationship is shown in the following Tables.

In a case that a single PTRS port is configured by the network device, an association relationship between an uplink PTRS port 0 (UL PTRS port 0) and the DMRS is shown in Table 1.

**Table 1**

| Value of PTRS-DMRS association indication field | DMRS port |
|---|---|
| 0 | 1^{st} scheduled DMRS port |
| 1 | 2^{nd} scheduled DMRS port |
| 2 | 3^{rd} scheduled DMRS port |
| 3 | 4^{th} scheduled DMRS port |

In other words, in a case that the PTRS-DMRS association indication field has a value of 0, the PTRS port 0 uses a same antenna port as the 1^{st} scheduled DMRS port, and in a case that the PTRS-DMRS association indication field has a value of 1, the PTRS port 0 uses a same antenna port as the 2^{nd} scheduled DMRS port.

In a case that two PTRS ports are configured by the network device, an association relationship between each of uplink PTRS ports 0 and 1 (UL PTRS ports 0 and 1) and the DMRS is shown in Table 2.

**Table 2**

| Value of MSB of PTRS-DMRS association indication field | DMRS port | Value of LSB of PTRS-DMRS association indication field | DMRS port |
|---|---|---|---|
| 0 | 1^{st} DMRS port in a DMRS port group sharing PTRS port 0 | 0 | 1^{st} DMRS port in a DMRS port group sharing PTRS port 1 |
| 1 | 2^{nd} DMRS port in a DMRS port group sharing PTRS port 0 | 1 | 2^{nd} DMRS port in a DMRS port group sharing PTRS port 1 |

In other words, in a case that a Most Significant Bit (MSB) of the PTRS-DMRS association indication field has a value of 0, the PTRS port 0 uses a same antenna port as the 1^{st} DMRS port in a group of DMRS ports sharing the PTRS port 0, and in a case that a Least Significant Bit (LSB) of the PTRS-DMRS association indication field has a value of 0, the PTRS port 0 uses a same antenna port as the 2^{nd} DMRS port in the group of DMRS ports sharing the PTRS port 0.

The maximum number of PTRS ports is obtained through configuring maxNrofPorts in the high-layer parameter PTRS-UplinkConfig as "2". In a case that the indicated maximum number of PTRS ports is 2, the network device divides the DMRS ports corresponding to SRS resources into two groups, and the association relationship is recommended for each of the two groups.

In addition, for the NCB PUSCH transmission, in an actual system, usually a Channel State Information-Reference Signal (CSI-RS) configured for downlink needs to be measured, and the terminal device measures a downlink signal through channel reciprocity to obtain uplink channel information. A procedure mainly includes the following steps.
1. The network device configures an associated downlink CSI-RS for the NCB transmission, so that the terminal device detects a downlink channel.
2. The terminal device selects a precoding matrix through the calculation on the downlink channel, and sends a SRS in each precoding beam direction on a configured SRS resource set.
3. The network device performs uplink channel detection on the SRS, performs resource scheduling for the terminal device, notifies the terminal device via downlink signaling, and configures or indicates, through a SRI field, the terminal device to select a beam in the precoding matrix.

The terminal device uses the modified precoding matrix to determine actual precoding and an allowed number of ranks, and then sends the PUSCH. The terminal device determines a limit of a precoding indication based on a maximum number of ranks (maxRank), and the number of SRS resources configured or indicated through the SRI field is not greater than maxRank. In order to enable the network device to modify the precoding matrix actually used by the terminal device, for the NCB transmission, the network device needs to configure one SRS resource set for the terminal device.

Mapping tables indicated in the SRI field for the NCB transmission are shown as follows, where Lmax represents the maximum number of ranks configured at a high layer, and N_{SRS} represents the number of SRS resources included in the SRS resource in the NCB transmission, which is also configured by the network device.

Table 3 shows a relationship between a bit field mapped to an SRS resource index in the SRI field and an indicated SRS resource in the NCB PUSCH transmission in a case that *L*ₘₐₓ = 1.

**Table 3**

| Bit field mapped to index | SRI(s), *N*_{SRS} = 2 | Bit field mapped to index | SRI(s), *N*_{SRS} = 3 | Bit field mapped to index | SRI(s), *N*_{SRS} = 4 |
|---|---|---|---|---|---|
| 0 | 0 | 0 | 0 | 0 | 0 |
| 1 | 1 | 1 | 1 | 1 | 1 |
| | | 2 | 2 | 2 | 2 |
| | | 3 | reserved | 3 | 3 |

Table 4 shows a relationship between a bit field mapped to an SRS resource index in the SRI field and an indicated SRS resource in the NCB PUSCH transmission in a case that *L*ₘₐₓ = 2.

**Table 4**

| Bit field mapped to index | SRI(s), *N*_{SRS} = 2 | Bit field mapped to index | SRI(s), *N*_{SRS} = 3 | Bit field mapped to index | SRI(s), *N*_{SRS} = 4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6-7 | reserved | 6 | 0,3 |
| | | | | 7 | 1,2 |
| | | | | 8 | 1,3 |
| | | | | 9 | 2,3 |
| | | | | 10-15 | reserved |

Table 5 shows a relationship between a bit field mapped to an SRS resource index in the SRI field and an indicated SRS resource in the NCB PUSCH transmission in a case that *L*ₘₐₓ = 3.

**Table 5**

| Bit field mapped to index | SRI(s), *N*_{SRS} = 2 | Bit field mapped to index | SRI(s), *N*_{SRS} = 3 | Bit field mapped to index | SRI(s), *N*_{SRS} = 4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14-15 | reserved |

Table 6 shows a relationship between a bit field mapped to an SRS resource index in a first SRI field and an indicated SRS resource in the NCB PUSCH transmission in a case that *L*ₘₐₓ = 4.

**Table 6**

| Bit field mapped to index | SRI(s), *N*_{SRS} = 2 | Bit field mapped to index | SRI(s), *N*_{SRS} = 3 | Bit field mapped to index | SRI(s), *N*_{SRS} = 4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14 | 0,1,2,3 |
| | | | | 15 | reserved |

Table 7 shows a relationship between a bit field mapped to an SRS resource index in a second SRI field and an indicated SRS resource in the NCB PUSCH transmission in a case that *L*ₘₐₓ = 4.

**Table 7**

| Bit field mapped to index | SRI(s), *N*_{SRS} = 2 | Bit field mapped to index | SRI(s), *N*_{SRS} = 3 | Bit field mapped to index | SRI(s), *N*_{SRS} = 4 |
|---|---|---|---|---|---|
| 0 | 0 | 0 | 0 | 0 | 0 |
| 1 | 1 | 1 | 1 | 1 | 1 |
| 0 | 0,1 | 2 | 2 | 2 | 2 |
| 1 | 2 layers: reserved | 3 | 1 layer: reserved | 3 | 3 |
| | | 0 | 0,1 | 4-7 | 1 layer: reserved |
| | | 1 | 0,2 | 0 | 0,1 |
| | | 2 | 1,2 | 1 | 0,2 |
| | | 3 | 2 layers: reserved | 2 | 0,3 |
| | | 0 | 0,1,2 | 3 | 1,2 |
| | | 1-3 | 3 layers: reserved | 4 | 1,3 |
| | | | | 5 | 2,3 |
| | | | | 6-7 | 2 layers: reserved |
| | | | | 0 | 0,1,2 |
| | | | | 1 | 0,1,3 |
| | | | | 2 | 0,2,3 |
| | | | | 3 | 1,2,3 |
| | | | | 4-7 | 3 layer: reserved |
| | | | | 0 | 0,1,2,3 |
| | | | | 1-7 | 4 layers: reserved |

In the embodiments of the present disclosure, considering how to implement the reliable transmission of the PTRS under the STxMP in a case that the network device schedules the PUSCH for the NCB SDM transmission, a transmission method for an uplink PTRS is presented. An uplink PTRS transmission parameter is determined based on received configuration information, and then the transmission of the PTRS is performed, so as to provide a condition for accurately estimating a CPE of the STxMP.

A transmission method for the PTRS and an apparatus provided in the embodiments of the present disclosure will be described hereinafter in details in conjunction with the drawings.

It should be appreciated that, in a case of no conflict, the following embodiments of the present disclosure and the implementation modes in the embodiments may be combined randomly to implement the transmission of the uplink PTRS. In addition, during the combination of the embodiments, an order of steps may change in a case of no conflict.

Referring to FIG. 2 which is a flow chart of a transmission method for an uplink PTRS provided in an embodiment of the present disclosure, the transmission method is executed by a terminal device. As shown in FIG. 2, the transmission method includes, but not limited to, the following steps.

Step 201: under a configuration of uplink STxMP, in a case that a network device schedules a PUSCH for non-codebook-based SDM transmission, the terminal device determines an uplink PTRS transmission parameter based on received configuration information. The PTRS transmission parameter includes a number of actual transmission ports of the PTRS and a DMRS port actually associated with each PTRS port, and different PTRS ports are associated with different DMRS ports. Optionally, a type of the PUSCH includes any one of: scheduled PUSCH, grant-free type 1 PUSCH, and grant-free type 2 PUSCH.

Optionally, the configuration information at least includes a maximum number of PTRS ports, an association indication between the PTRS and the DMRS port, and DMRS port configuration information.

In some possible embodiments of the present disclosure, the maximum number of PTRS ports is received by the terminal device via a Radio Resource Control (RRC) message, and the association indication between the PTRS and the DMRS port and the DMRS port configuration information are received by the terminal device via DCI signaling, which will not be particularly defined herein.

In some possible embodiments of the present disclosure, under the STxMP configuration, in a case that a scheduling mode is Single TRP (STRP) transmission, a maximum value of the maximum number of PTRS ports is 2; in a case that a scheduling mode is Single Frequency Network (SFN) transmission of MTRP transmission, the maximum value of the maximum number of PTRS ports is 1 or 2; and in a case that a scheduling mode is SDM transmission of the MTRP transmission, the maximum value of the maximum number of PTRS ports is 2.

In some possible embodiments of the present disclosure, one piece of the maximum number of PTRS ports is configured, and the one piece of the maximum number of PTRS ports is used for STRP transmission, SFN transmission and SDM transmission. In other words, the terminal device receives the one piece of the maximum number of PTRS ports configured by the network device.

In other words, with respect to the STRP transmission, the SFN transmission and the SDM transmission, the same maximum number of PTRS ports is used by the terminal device, and at this time, a maximum value of the maximum number of PTRS ports is 2.

In some possible embodiments of the present disclosure, two pieces of the maximum number of PTRS ports are configured, one of the two pieces of the maximum number of PTRS ports is used for STRP transmission, the other of the two pieces of the maximum number of PTRS ports is used for MTRP transmission under STxMP, and the MTRP transmission under STxMP at least includes SFN transmission and SDM transmission.

In other words, with respect to the STRP transmission, the SFN transmission and the SDM transmission, the terminal device receives two pieces of the maximum number of PTRS ports, and the maximum number of PTRS ports for the MTRP transmission under STxMP is independent of the maximum number of PTRS ports for the STRP transmission. The two parameters are received by the terminal device via one piece of signaling or two pieces of signaling, which will not be particularly defined herein.

Optionally, a maximum value of the maximum number of PTRS ports corresponding to the STRP transmission is 2, and a maximum value of the maximum number of PTRS ports corresponding to the SFN transmission and the SDM transmission is also 2.

In some possible embodiments of the present disclosure, at least three pieces of the maximum number of PTRS ports are configured, one of the at least three pieces of the maximum number of PTRS ports is used for STRP transmission, another of the at least three pieces of the maximum number of PTRS ports is used for SDM transmission, and another of the at least three pieces of the maximum number of PTRS ports is used for SFN transmission.

In other words, with respect to the STRP transmission, the SFN transmission and the SDM transmission, the terminal device receives at least three pieces of the maximum number of PTRS ports, and these three parameters are received by the terminal device via one piece of signaling or three pieces of signaling, which will not be particularly defined herein.

Optionally, a maximum value of the maximum number of PTRS ports corresponding to the STRP transmission is 2, a maximum value of the maximum number of PTRS ports corresponding to the SDM transmission of the MTRP transmission is also 2, and a maximum value of the maximum number of PTRS ports corresponding to the SFN transmission of the MTRP transmission is 1 or 2.

Optionally, the association indication between the PTRS and the DMRS port is shown in the above Table 1 and Table 2. In other words, the association indication between the PTRS and the DMRS port in a case that the PTRS has a single port is different from the association indication between the PTRS and the DMRS port in a case that the PTRS has double ports.

In some embodiments of the present disclosure, the DMRS port configuration information includes a type of the DMRS port, a number of the DMRS ports, DMRS port group information, an antenna port corresponding to the DMRS port, etc., which will not be particularly defined herein.

Optionally, the number of the actual transmission ports of the PTRS determined by the terminal device based on a predetermined rule and the received configured information is 0, 1 or 2.

In some possible embodiments of the present disclosure, in a case that the maximum value of the maximum number of PTRS ports is 1, the number of the actual transmission ports of the PTRS determined by the terminal device is 0 or 1.

Optionally, in a case that no PTRS is configured for the terminal device in a high-layer parameter DMRS-UplinkConfig, the number of the actual transmission ports of the PTRS determined by the terminal device is 0, i.e., no uplink PTRS is transmitted. In a case that a parameter UL-PTRS-present is configured by the network device for the terminal device and the maximum value of the maximum number of PTRS ports is 1, the number of the actual transmission ports of the PTRS determined by the terminal device is 0 or 1.

In some possible embodiments of the present disclosure, in a case that the maximum value of the maximum number of PTRS ports is 2, the number of the actual transmission ports of the PTRS determined by the terminal device is 0, 1 or 2.

Optionally, in a case that no PTRS is configured for the terminal device in the high-layer parameter DMRS-UplinkConfig, the number of the actual transmission ports of the PTRS determined by the terminal device is 0, i.e., no uplink PTRS is transmitted. In a case that the parameter UL-PTRS-present is configured by the network device for the terminal device and the maximum value of the maximum number of PTRS ports is 2, the number of the actual transmission ports of the PTRS determined by the terminal device is 0, 1 or 2.

Optionally, the number of DMRS ports actually associated with each PTRS port is one or several, and different PTRS ports are associated with different DMRS ports, which will not be particularly defined herein.

In some possible embodiments of the present disclosure, the predetermined rule is a rule for assisting the terminal device to determine the uplink PTRS transmission parameter, and it is determined by the terminal device based on an agreement, or received from the network device, e.g., received by the terminal device via a RRC message, which will not be particularly defined herein.

Step 202: the terminal device sends the PTRS to the network device based on the uplink PTRS transmission parameter.

After determining the number of the actual transmission ports of the uplink PTRS and the DMRS port actually associated with each PTRS port, the terminal device sends the PTRS via an antenna port corresponding to one or more DMRS ports associated with the PTRS port.

In the embodiments of the present disclosure, under the STxMP configuration, in a case that the network device schedules the PUSCH for the NCB SDM transmission, the terminal device determines the PTRS transmission parameter based on the received configuration information and the predetermined rule, and then sends the PTRS based on the PTRS transmission parameter. As a result, it is able to implement the reliable transmission of the PTRS, and provide a condition for accurately estimating a CPE under the STxMP configuration.

Referring to FIG. 3 which is a flow chart of another transmission method for an uplink PTRS provided in an embodiment of the present disclosure, the transmission method is executed by a terminal device. As shown in FIG. 3, the transmission method includes, but not limited to, the following steps.

Step 301: under a configuration of uplink STxMP, in a case that a network device schedules a PUSCH for SDM transmission of NCB STRP transmission, the terminal devices determines that a number of actual transmission ports of the PTRS is 1 or 2. The number of the actual transmission ports of the PTRS is determined based on a number of PTRS port index values corresponding to one or more SRS resources configured or indicated through a SRI field, and the one or more SRS resources are included in a SRS resource set associated with the SRI field.

Optionally, with respect to the grant-free PUSCH transmission, the terminal device determines the number of the actual transmission ports of the PTRS based on the number of PTRS port index values corresponding to the one or more SRS resources configured through the SRI field, and with respect to the scheduled PUSCH, the terminal device determines the number of the actual transmission ports of the PTRS based on the number of PTRS port index values corresponding to the one or more SRS resources indicated through the SRI field.

In the embodiments of the present disclosure, although the STxMP configuration is received by the terminal device, during the MTRP transmission, a SRS resource set indicator is further used to dynamically indicate dynamic handover between the STRP transmission and the MTRP transmission, and indicate a specific SRS resource set associated with the PUSCH transmission. In this way, in a case that the SRS resource set indicator indicates the STRP transmission, the terminal device determines the number of the actual transmission ports of the PTRS based on the number of the PTRS port index values corresponding to the one or more SRS resources configured or indicated through the SRI field.

For example, in a case that the SRS resource set indicator dynamically indicates the STRP transmission, three SRS resources are configured or indicated through the SRI field, and the PTRS port index values (ptrs-PortIndex) corresponding to the three SRS resources are index0, index1 and index0. In other words, the SRS resources in the SRS resource set associated with the SRI field correspond to two PTRS port index values, i.e., index0 and index1, so the terminal device determines that the number of the actual transmission ports of the PTRS is 2.

In other words, in a case that a scheduling mode is the STRP transmission, the number of the actual transmission ports of the PTRS is determined based on the number of the PTRS port index values corresponding to the SRS resources in the SRS resource set associated with the SRI field configured by the network device.

Optionally, different SRS resource sets are associated with a panel, a TRP or a PUSCH Transmission Occasion (TO) on beam information.

Different SRS resource sets are associated with PUSCH TOs transmitted on different panels in different TRP directions, and different directions correspond to beam information corresponding to different Transmission Configuration Indication (TCI) states. For example, a first SRS resource set is associated with a first TCI state/a first TRP, i.e., a corresponding PUSCH TO is sent to TRP1. A second SRS resource set is associated with a second TCI state/a second TRP, i.e., a corresponding PUSCH TO is sent to TRP2. An association between the SRS resource set and the TCI state/TRP is determined based on different code points in the SRS resource set indicator in DCI.

Step 302: the terminal device determines that DMRS ports corresponding to one or more SRS resources in the associated SRS resource set corresponding to a same PTRS port index value share a same PTRS port.

Based on the above instance, in a case that the maximum number of ranks Lmax=3 and the SRS resource set associated with the SRI field configured by the network device includes three SRS resources, i.e., SRS resource #0, SRS resource #1 and SRS resource #2, the PTRS port index values corresponding to the three SRS resources are index0, index1 and index0, and the DMRS ports corresponding to the three SRS resources are DMRS port #0, DMRS port #1 and DMRS port #2. In a case that a value of a bit field mapped to a SRS resource index in the SRI field is 6 (i.e., the SRI field is 6), with reference to the SRI field in a column of N_{SRS}=3 in Table 5, the SRI specifically indicates SRS resource #0, SRS resource #1 and SRS resource #2, and the DMRS ports corresponding to the SRS resources indicated through the SRI field are DMRS port #0, DMRS port #1 and DMRS port #2. The terminal device determines that the two DMRS ports (DMRS port #0 and DMRS port #2) corresponding to SRS resource #0 and SRS resource #2 share the PTRS port index value index0, and the DMRS port (DMRS port #1) corresponding to SRS resource #1 and the PTRS port having a port index value of index1 share an antenna port.

Alternatively, in a case that the maximum number of ranks Lmax=3 and the SRS resource set associated with the SRI field configured by the network device includes four SRS resources, i.e., SRS resource #0, SRS resource #1, SRS resource #2 and SRS resource #3, the PTRS port index values corresponding to the four SRS resources are index0, index1, index1 and index0, and the DMRS ports corresponding to the four SRS resources are DMRS port #0, DMRS port #1, DMRS port #2 and DMRS port #3. In a case that the SRI indication is equal to 11, with reference to the SRI field in a column of N_{SRS}=4 in Table 5, the SRI field specifically indicates SRS resource #0, SRS resource #1 and SRS resource #3, and the DMRS ports corresponding to the SRS resources indicated through the SRI field are DMRS port #0, DMRS port #1 and DMRS port #3. The terminal device determines that DMRS port #0 and DMRS port #3 corresponding to SRS resource #0 and SRS resource #3 share the PTRS port index value index0, and DMRS port #1 corresponding to SRS resource #1 and the PTRS port having a port index value of index1 share an antenna port

Step 303: the terminal device determines the DMRS port actually associated with each PTRS based on the association indication between the PTRS and the DMRS port.

In the embodiments of the present disclosure, after determining the DMRS ports sharing each PTRS port, the terminal device determines the DMRS port actually associated with the PTRS based on the received association indication between the PTRS and the DMRS port (e.g., Table 1).

Based on the above instance where the SRS resource set associated with the SRI field configured by the network device includes three SRS resources, the terminal device has known that two DMRS ports (DMRS port #0 and DMRS port #2) share the PTRS port 0. In a case that the PTRS-DMRS association indication field has a value of 1, as shown in Table 1, the terminal device determines that DMRS port #2 is actually associated with the PTRS port 0.

Alternatively, based on the above instance where the SRS resource set associated with the SRI field configured by the network device includes four SRS resources, the terminal device has known that two DMRS ports (DMRS port #0 and DMRS port #3) share the PTRS port 0. In a case that the PTRS-DMRS association indication field has a value of 1, as shown in Table 1, the terminal device determines that DMRS port #3 is actually associated with the PTRS port 0.

In other words, the terminal device determines the DMRS port actually used in a case that the PTRS is sent in the PUSCH TO transmission based on the association indication between the PTRS and the DMRS port. It should be appreciated that, in the above instance, the index numbers of the one or more SRS resources configured or indicated through the SRI field, a correspondence between the SRS resources and the PTRS port index numbers and a correspondence between the SRS resources and the DMRS ports are all for illustrative purposes, but shall not be construed as limiting the scheme for determining the number of the actual transmission ports of the PTRS in the embodiments of the present disclosure.

Step 304: the terminal device sends the PTRS to the network device based on the number of the actual transmission ports of the PTRS and the DMRS port actually associated with the PTRS port.

The implementation of Step 304 may refer to that mentioned hereinabove in the other embodiments of the present disclosure, and thus will not be particularly defined herein.

In the embodiments of the present disclosure, under the STxMP configuration, in a case that the network device schedules the PUSCH for the NCB SDM transmission and the scheduling mode is the STRP transmission, the terminal device determines the number of the actual transmission ports of the PTRS based on the number of the PTRS port index values corresponding to the one or more SRS resources configured or indicated through the SRI field, determines the DMRS port actually associated with each PTRS based on the association indication between the PTRS and the DMRS port after determining one or more DMRS ports sharing a same PTRS port, and sends the PTRS to the network device based on the number of the actual transmission ports of the PTRS and the DMRS port actually associated with the PTRS port. As a result, it is able to implement the reliable transmission of the PTRS under the STxMP configuration in a case that the PUSCH scheduling mode is the SDM transmission of the STRP transmission, and provide a condition for accurately estimating a CPE under the STxMP configuration.

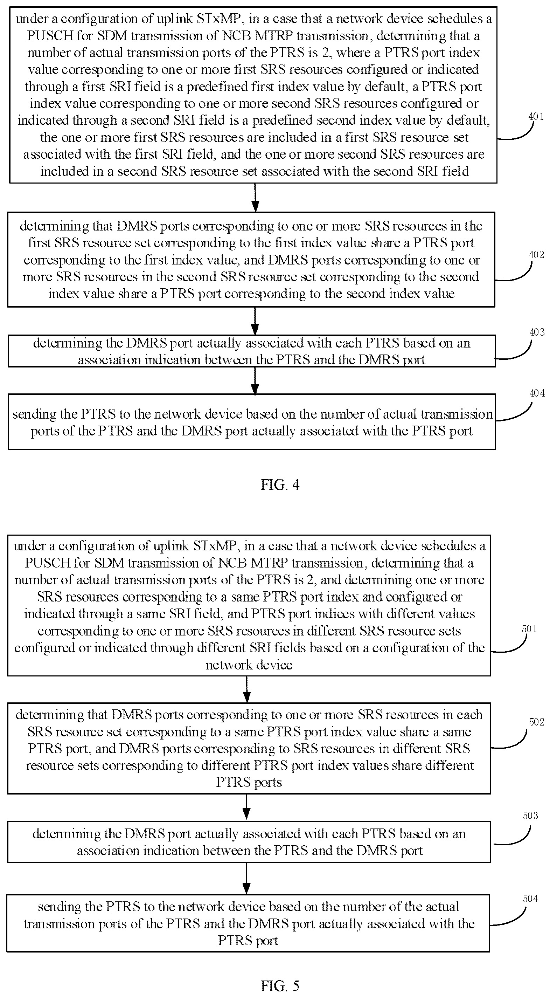

Referring to FIG. 4 which is a flow chart of another transmission method for an uplink PTRS provided in an embodiment of the present disclosure, the transmission method is executed by a terminal device. As shown in FIG. 4, the transmission method includes, but not limited to, the following steps.

Step 401: under a configuration of uplink STxMP, in a case that a network device schedules a PUSCH for SDM transmission of NCB MTRP transmission, the terminal device determines that a number of actual transmission ports of the PTRS is 2. A PTRS port index value corresponding to one or more first SRS resources configured or indicated through a first SRI field is a predefined first index value by default, a PTRS port index value corresponding to one or more second SRS resources configured or indicated through a second SRI field is a predefined second index value by default, the one or more first SRS resources are included in a first SRS resource set associated with the first SRI field, and the one or more second SRS resources are included in a second SRS resource set associated with the second SRI field.

It should be appreciated that, in the embodiments of the present disclosure, the expressions "first SRS resource" and "second SRS resource" are merely used to differentiate the SRS resources from each other, but shall not be construed as limiting the SRS resource indices. In addition, the expressions "first SRS resource set" and "second SRS resource set" are also merely used to differentiate the SRS resource sets from each other, but shall not be construed as limiting the SRS resource set indices.

Optionally, the first index value is index0 and the second index value is index1; or the first index value is index1 and the second index value is index0.

Optionally, different SRS resource sets are associated with a panel, a TRP or PUSCH transmission occasion on beam information.

In the embodiments of the present disclosure, although the STxMP configuration is received by the terminal device, during the MTRP transmission, a SRS resource set indicator is further used to dynamically indicate dynamic handover between the STRP transmission and the MTRP transmission, and indicate a specific SRS resource set associated with the PUSCH transmission. In this way, in a case that the SRS resource set indicator indicates the MTRP transmission, the terminal device determines that the PTRS port index value corresponding to the one or more first SRS resources configured or indicated through the first SRI field is the predefined first index value by default, and the PTRS port index value corresponding to the one or more second SRS resources configured or indicated through the second SRI field is the predefined second index value by default.

In other words, in a case that the SRS resource set indicator dynamically indicates the MTRP transmission, the terminal device ignores the parameter ptrs-PortIndex corresponding to all the SRS resources configured by the network device, and re-determines the PTRS port index value corresponding to one or more SRS resources configured or indicated through each SRI field.

For example, in a case that Lmax=2 on each panel and a scheduling mode is the MTRP transmission, the terminal device determines a SRS resource set associated with each SRI field based on a code point in the SRS resource set indicator configured by the network device. For example, in a case that the code point in the SRS resource set indicator is 10, the terminal device determines that the first SRI field and the second SRI field are associated with the first SRS resource set and the second SRS resource set respectively. The first SRS resource set associated with the first SRI field configured by the network device includes four SRS resources, i.e., SRS resource #0, SRS resource #1, SRS resource #2, and SRS resource #3, and parameters ptrs-PortIndex corresponding to the four SRS resources are index0, index1, index1 and index1. The second SRS resource set associated with the second SRI field includes four SRS resources, i.e., SRS resource #4, SRS resource #5, SRS resource #6 and SRS resource #7, and the PTRS port index values corresponding to the four SRS resources are index0, index1, index1 and index0. At this time, the PTRS port index values corresponding to the SRS resources in different SRS resource sets include index0 and index1, so the DMRS ports sharing a same PTRS port may correspond to different panels. Generally, different panels correspond to different CEP estimates, and the estimation is performed using an independent PTRS port, so this situation is not reasonable. In addition, even based on a network configuration, the number of PTRSs on the panels actually corresponding to SRI1 and SRI2 may be not the same. For example, in a case that the first SRI field is 5, based on the meaning of the SRI field in a column of N_{SRS}=4 in Table 4, the first SRI field specifically indicates SRS resource #0 and SRS resource #2, i.e., the number of the PTRS ports actually corresponding to SRI1 is 2 (index0 and index1). In a case that the second SRI field is 7, referring to Table 4, the second SRI field specifically indicates SRS resource #5 and SRS resource #6, i.e., the number of the PTRS ports actually corresponding to SRI2 is 1 (index1). At this time, the terminal device directly ignores the above-mentioned configuration of the PTRS port index, and directly determines that the PTRS port index value corresponding to two SRS resources (SRS resource #0 and SRS resource #2) merely indicated through the first SRI field in all the SRS resources in the first SRS resource set is index0 (or index1), and the PTRS port index value corresponding to two SRS resources (SRS resource #5 and SRS resource #6) merely indicated through the second SRI field in all the SRS resources in the second SRS resource set is index1 (or index0).

The terminal device determines that the PTRS port index values corresponding to all the SRS resources in different SRS resource sets are different, i.e., the terminal device determines that the number of the actual transmission ports of the PTRS corresponding to each of the two SRS resource set is 1, and the number of the actual transmission ports of the PTRS is 2.

It should be appreciated that, in the embodiments of the present disclosure, the predefined first index value is associated with the first SRI field by default, and the second predefined second index value is associated with the second SRI field by default; or the predefined first index value is associated with the first SRS resource by default, and the predefined second index value is associated with the second SRS resource by default, which will not be particularly defined herein.

Step 402: the terminal device determines that DMRS ports corresponding to one or more SRS resources in the first SRS resource set corresponding to the first index value share a PTRS port corresponding to the first index value, and DMRS ports corresponding to one or more SRS resources in the second SRS resource set corresponding to the second index value share a PTRS port corresponding to the second index value.

Based on the above instance, the PTRS port index values corresponding to two SRS resources (SRS resource #0 and SRS resource #2) indicated through the first SRI field in all the SRS resources in the first SRS resource set are the first index value (index0), and the PTRS port index values corresponding to two SRS resources (SRS resource #5 and SRS resource #6) indicated through the second SRI field in all the SRS resources in the second SRS resource set are the second index value (index1). At this time, in a case that a DMRS configuration type (dmrs-Type) is 1 and a maximum number of time-domain symbols allowed to be occupied (maxLength) is 2, the DMRS port configured by the network device for the terminal device is determined with reference to Table 8.

For example, in a case that a DMRS port indication value is 1, the terminal device determines that the DMRS ports configured by the network device for the terminal device is {0,1,4,5} based on Table 8. Then, the terminal device determines the DMRS port corresponding to one or more SRS resources indicated through each SRI field based on a certain rule.

For example, the terminal device determines that the DMRS ports in different CDM groups correspond to one or more SRS resources indicated through different SRI fields.

Alternatively, the terminal device determines that the former two DMRS ports correspond to one or more SRS resources indicated through the first SRI field, and the latter two DMRS ports correspond to one or more SRS resources indicated through the second SRI field. In other words, the two SRS resources indicated through the first SRI field correspond to DMRS port #0 and DMRS port #1, and it is already known that the PTRS port index values corresponding to SRS resource #0 and SRS resource #2 are both index0, so the terminal device determines that DMRS port #0 and DMRS port #1 share the PTRS port corresponding to the first index value. The two SRS resources indicated through the second SRI field correspond to DMRS port #4 and DMRS port #5, and it is already known that the PTRS port index values corresponding to SRS resource #5 and SRS resource #6 are both index1, so the terminal device determines that DMRS port #4 and DMRS port #5 share the PTRS port corresponding to the second index value.

Alternatively, the terminal device determines that the latter two DMRS ports correspond to one or more SRS resources indicated through the first SRI field, and the former two DMRS ports correspond to one or more SRS resources indicated through the second SRI field. In other words, the two SRS resources indicated through the first SRI field correspond to DMRS port #4 and DMRS port #5, i.e., DMRS port #4 and DMRS port #5 share the PTRS port corresponding to the first index value. The two SRS resources indicated through the second SRI field correspond to DMRS port #0 and DMRS port #1, i.e., DMRS port #0 and DMRS port #1 share the PTRS port corresponding to the second index value.

**Table 8**

| **Value** | **Number of DMRS CDM group(s) without data** | **DMRS port(s)** | **Number of front-load symbols** |
|---|---|---|---|
| 0 | 2 | 0-3 | 1 |
| 1 | 2 | 0,1,4,5 | 2 |
| 2 | 2 | 2,3,6,7 | 2 |
| 3 | 2 | 0,2,4,6 | 2 |
| 4-15 | Reserved | Reserved | Reserved |

Step 403: the terminal device determines the DMRS port actually associated with each PTRS based on the association indication between the PTRS and the DMRS port.

In the embodiments of the present disclosure, after determining the DMRS ports sharing each PTRS port, the terminal device determines the DMRS port actually associated with the PTRS based on the received association indication between the PTRS and the DMRS port (e.g., Table 2).

Based on the above instance, presumed that the first index value is index0 and the second index value is index2, the terminal device determines that, in the first SRS resource set, two DMRS ports, i.e., DMRS port #0 and DMRS port #1, share the PTRS index0, and two DMRS ports, i.e., DMRS port #4 and DMRS port #5, share the PTRS index1. In a case that the PTRS-DMRS association indication field has a value of "01", i.e., a MSB has a value of 0, the terminal device determines that the DMRS port actually associated with the PTRS port 0 is a first DMRS port in DMRS port #0 and DMRS port #1, i.e., DMRS port #0. Correspondingly, a LSB has a value of 1, so the DMRS port actually associated with the PTRS port 1 is a second DMRS port of DMRS port #4 and DMRS port #5, i.e., DMRS port #5.

In other words, the terminal device determines the DMRS port actually used in a case that each PTRS is sent in the PUSCH TO transmission based on the association indication between the PTRS and the DMRS port.

Step 404: the terminal device sends the PTRS to the network device based on the number of the actual transmission ports of the PTRS and the DMRS port actually associated with the PTRS port.

The implementation of Step 404 may refer to that mentioned hereinabove in the other embodiments of the present disclosure, and thus will not be particularly defined herein.

In the embodiments of the present disclosure, under the STxMP configuration, in a case that the network device schedules the PUSCH for the SDM transmission of the NCB MTRP transmission, the terminal device determines that the number of the actual transmission ports of the PTRS is 2, the PTRS port index value corresponding to the one or more first SRS resources configured or indicated through the first SRI field is the first index value, and the PTRS port index value corresponding to the one or more second SRS resources configured or indicated through the second SRI field is the second index value. After determining the one or more DMRS ports sharing the PTRS ports corresponding to the first index value and the second index value, the terminal device determines the DMRS port actually associated with each PTRS based on the association indication between the PTRS and the DMRS port, and sends the PTRS to the network device based on the number of the actual transmission ports of the PTRS and the DMRS port associated with the PTRS port. As a result, it is able to implement the reliable transmission of the PTRS in a case that the scheduling mode is the SDM transmission of the MTRP transmission, and provide a condition for accurately estimating a CPE under the STxMP configuration.

Referring to FIG. 5 which is a flow chart of another transmission method for an uplink PTRS provided in an embodiment of the present disclosure, the transmission method is executed by a terminal device. As shown in FIG. 5, the transmission method includes, but not limited to, the following steps.

Step 501: under a configuration of uplink STxMP, in a case that a network device schedules a PUSCH for SDM transmission of NCB MTRP transmission, the terminal device determines that a number of actual transmission ports of the PTRS is 2, and determines one or more SRS resources corresponding to a same PTRS port index and configured or indicated through a same SRI field, and PTRS port indices with different values corresponding to one or more SRS resources in different SRS resource sets configured or indicated through different SRI fields based on a configuration of the network device.

Different SRS resource sets are associated with a panel, a TRP or a PUSCH TO on beam information.

In other words, different SRS resource sets are associated with PUSCH TOs sent on different panels in different TRP directions, and different directions correspond to beam information corresponding to different TCI states. For example, a first SRS resource set is associated with a first TCI state/a first TRP, i.e., a corresponding PUSCH TO is sent to TRP1. A second SRS resource set is associated with a second TCI state/a second TRP, i.e., a corresponding PUSCH TO is sent to TRP2. An association between the SRS resource set and the TCI state/TRP is determined based on different code points in the SRS resource set indicator in DCI.

In the embodiments of the present disclosure, during the MTRP transmission, the terminal device also performs dynamic handover between the STRP transmission and the MTRP transmission based on a dynamic indication of the SRS resource set indicator. In a case of determining the number of the actual transmission ports of the PTRS, the terminal device at first determines whether the current transmission is the STRP transmission or the MTRP transmission. In a case that the SRS resource set indicator indicates the MTRP transmission, the terminal device performs filtration on the PTRS port index values corresponding to one or more SRS resources in each SRS resource set configured by the network device, and then determines the number of the actual transmission ports of the PTRS based on the filtered PTRS port index value.

For example, in a case that Lmax=2 on each panel and a scheduling mode is the MTRP transmission, the terminal device determines the SRS resource set associated with each SRI field based on a code point in the SRS resource set indicator configured by the network device. For example, in a case that the code point in the SRS resource set indicator is 10, the terminal device determines that the first SRI field and the second SRI field are associated with the first SRS resource set and the second SRS resource set respectively. The first SRS resource set associated with the first SRI field configured by the network device includes four SRS resources, i.e., SRS resource #0, SRS resource #1, SRS resource #2 and SRS resource #3, and ptrs-PortIndex corresponding to the four SRS resources are index0, index1, index1 and index1. The second SRS resource set associated with the second SRI field configured by the network device includes four SRS resources, i.e., SRS resource #4, SRS resource #5, SRS resource #6 and SRS resource #7, and the PTRS port index values corresponding to the four SRS resources are index0, index1, index1 and index0. At this time, the PTRS port index values corresponding to the SRS resources in different SRS resource sets include index0 and index1, so the DMRS ports sharing a same PTRS port may correspond to different panels. Generally, different panels correspond to different CEP estimates, and the estimation is performed using an independent PTRS port, so this situation is not reasonable. In addition, even based on a network configuration, the number of PTRSs on the panels actually corresponding to SRI1 and SRI2 may be not the same. Hence, in a case that a scheduling mode is the SDM transmission of the MTRP transmission, the terminal device determines that the first SRI field is merely used to configure or indicate one or more SRS resources corresponding to index0 (or index1), and the second SRI field is merely used to configure or indicate one or more SRS resources corresponding to index 1 (or index0).

For example, in a case that the first SRI field is 5, based on the meaning of the SRI field in a column of N_{SRS}=4 in Table 4, the first SRI field specifically indicates SRS resource #0 and SRS resource #2, i.e., the number of the PTRS ports actually corresponding to SRI1 is 2 (index0 and index1). In a case that the second SRI field is 7, referring to Table 4, the second SRI field specifically indicates SRS resource #5 and SRS resource #6, i.e., the number of the PTRS ports actually corresponding to SRI2 is 1 (index1). The first SRI field is merely used to configure or indicate the SRS resources corresponding to index0 and the second SRI field is merely used to configure or indicate the SRS resources corresponding to index1. In a case that the first SRI field is 5, the terminal device determines that SRS resource #0 and SRS resource #2 indicated through the first SRI field both correspond to PTRS index0, and in a case that the second SRI field is 7, SRS resource #5 and SRS resource #6 indicated through the second SRI field both correspond to PTRS index1.

In other words, the terminal device determines that, in a case that the scheduling mode is the SDM transmission of the MTRP transmission, the number of the actual transmission ports of the PTRS is 2.

In some possible embodiments of the present disclosure, in a case that one or more SRS resources configured or indicated through one SRI field merely correspond to one PTRS port index value, the terminal device determines one or more SRS resources corresponding to another PTRS port index value and configured or indicated through another SRI field.

For example, in a case that the first SRI field is 7, referring to Table 4, the first SRI field indicates SRS resource #1 and SRS resource #2, and the two SRS resources both correspond to PTRS index1. In a case that the second SRI field is 8, referring to Table 4, the second SRI field indicates SRS resource #5 and SRS resource #7, and the two SRS resources correspond to PTRS index1 and index0 respectively. Hence, the terminal device determines that all the SRS resources or one or more SRS resources configured or indicated through the first SRI field in the first SRS resource set correspond to PTRS index1, and all the SRS resources or one or more SRS resources configured or indicated through the second SRI field in the second SRS resource set correspond to PTRS index0.

In some possible embodiments of the present disclosure, in a case that PTRS port index values corresponding to one or more SRS resources configured or indicated through two SRI fields are not unique, a PTRS port index value corresponding to one or more SRS resources configured or indicated through each SRI field is determined in a predefined manner.

For example, the predefined manner includes that the PTRS port index value corresponding to one or more SRS resources configured or indicated through the first SRI field is index0, and the PTRS port index value corresponding to one or more SRS resources configured or indicated through the second SRI field is index1. In a case that the first SRI field is 5 and the second SRI field is 8, i.e., the first SRI field indicates SRS resource #0 (corresponding to PTRS index0) and SRS resource #2 (corresponding to PTRS index1) and the second SRI field indicates SRS resource #5 (corresponding to PTRS index1) and SRS resource #7 (corresponding to PTRS index0), the terminal device determines that all the SRS resources or the one or more SRS resources configured or indicated through the first SRI field (e.g., SRS resource #0 and SRS resource #2) in the first SRS resource set correspond to PTRS index0, and all the SRS resources or the one or more SRS resources configured or indicated through the second SRI field in the second SRS resource set correspond to PTRS index1.

Alternatively, the terminal device determines that SRS resource #0 and SRS resource #2 configured or indicated through the first SRI field correspond to PTRS index1, and SRS resource #5 and SRS resource #7 configured or indicated through the second SRI field correspond to PTRS index0.

In some possible embodiments of the present disclosure, in a case that PTRS port index values corresponding to one or more SRS resources configured or indicated through two SRI fields are unique, the PTRS port index value corresponding to one or more SRS resources configured or indicated through each SRI field is used.

Taking the above-mentioned configuration of each SRS resource set as an example, the first SRI field is 7 and the second SRI field is 6. The first SRI field configures or indicates SRS resource #1 and SRS resource #2, and the two SRS resources both correspond to PTRS index1. The second SRI field configures or indicates SRS resource #4 and SRS resource #7, and the two SRS resources both correspond to PTRS index0. The terminal device determines that the PTRS port index value corresponding to all the SRS resources or one or more SRS resources configured or indicated through the first SRI field in the first SRS resource set is index1, and the PTRS port index value corresponding to all the SRS resources or one or more SRS resources configured or indicated through the second SRI field in the second SRS resource set is index0.

Step 502: the terminal device determines that DMRS ports corresponding to one or more SRS resources in each SRS resource set corresponding to a same PTRS port index value share a same PTRS port, and DMRS ports corresponding to SRS resources in different SRS resource sets corresponding to different PTRS port index values share different PTRS ports.

Based on the above-mentioned instance, the first SRI field configures or indicates SRS resource #0 corresponding to PTRS index0, and the second SRI field configures or indicates SRS resource #5 and SRS resource #6 corresponding to PTRS index1. In addition, a DMRS configuration type (dmrs-type) is 1 and a maximum number of time-domain symbols allowed to be occupied (maxLength) is 2. At this time, referring to Table 8, the terminal device determines the DMRS port configured by the network device for the terminal device.

For example, in a case that a DMRS port indication value is 1, the terminal device determines that the DMRS ports configured by the network device for the terminal device is {0,1,4,5} based on Table 8. Then, the terminal device determines the DMRS port corresponding to one or more SRS resources indicated through each SRI field based on a certain rule.

For example, the terminal device determines that the DMRS ports in different CDM groups correspond to one or more SRS resources indicated through different SRI fields.

Alternatively, the terminal device determines that the former two DMRS ports correspond to one or more SRS resources indicated through the first SRI field, and the latter two DMRS ports correspond to one or more SRS resources indicated through the second SRI field. In other words, the two SRS resources indicated through the first SRI field correspond to DMRS port #0 and DMRS port #1, and it is already known that the PTRS port index values corresponding to SRS resource #0 and SRS resource #2 are both index0, so the terminal device determines that DMRS port #0 and DMRS port #1 share the PTRS index0. The two SRS resources indicated through the second SRI field (SRS resource #5 and SRS resource #6) correspond to DMRS port #4 and DMRS port #5, and it is already known that the PTRS port index values corresponding to SRS resource #5 and SRS resource #6 are both index1, so the terminal device determines that DMRS port #4 and DMRS port #5 share the PTRS index1.

Alternatively, the terminal device determines that the latter two DMRS ports correspond to one or more SRS resources indicated through the first SRI field, and the former two DMRS ports correspond to one or more SRS resources indicated through the second SRI field. In other words, the two SRS resources indicated through the first SRI field (SRS resource #0 and SRS resource #2) correspond to DMRS port #4 and DMRS port #5, i.e., DMRS port #4 and DMRS port #5 share the PTRS index0. The two SRS resources indicated through the second SRI field (SRS resource #5 and SRS resource #6) correspond to DMRS port #0 and DMRS port #1, i.e., DMRS port #0 and DMRS port #1 share the PTRS index1.

Step 503: the terminal device determines the DMRS port actually associated with each PTRS based on the association indication between the PTRS and the DMRS port.

In the embodiments of the present disclosure, after determining the DMRS ports sharing each PTRS port, the terminal device determines the DMRS port actually associated with the PTRS based on the received association indication between the PTRS and the DMRS port (e.g., Table 2).

Based on the above instance, the terminal device has known that the DMRS ports sharing PTRS index0 include DMRS port #0 and DMRS port #1, and the DMRS ports sharing PTRS index1 include DMRS port #4 and DMRS port #5. In a case that the PTRS-DMRS association indication field has a value of 01, i.e., a MSB has a value of 0, the terminal device determines that the DMRS port actually associated with PTRS index0 is a first DMRS port in DMRS port #0 and DMRS port #1, i.e., the DMRS port actually associated with PTRS index0 is DMRS port #0. Correspondingly, a LSB has a value of 1, so the DMRS port actually associated with the PTRS port 1 is a second DMRS port of DMRS port #4 and DMRS port #5, i.e., DMRS port #5.

In other words, the terminal device determines the DMRS port actually used in a case that each PTRS is sent in the PUSCH TO transmission based on the association indication between the PTRS and the DMRS port.

It should be appreciated that, in the above instance, the index numbers of the one or more SRS resources configured or indicated through the SRI field, a correspondence between the SRS resources and the PTRS port index numbers and a correspondence between the SRS resources and the DMRS ports are all for illustrative purposes, but shall not be construed as limiting the scheme for determining the number of the actual transmission ports of the PTRS in the embodiments of the present disclosure.

Step 504: the terminal device sends the PTRS to the network device based on the number of the actual transmission ports of the PTRS and the DMRS port actually associated with the PTRS port.

The implementation of Step 504 may refer to that mentioned hereinabove in the other embodiments of the present disclosure, and thus will not be particularly defined herein.

In the embodiments of the present disclosure, under the STxMP configuration, in a case that the network device schedules the PUSCH for the SDM transmission of the NCB MTRP transmission, the terminal device determines the one or more SRS resources corresponding to a same PTRS port index and configured or indicated through a same SRI field and PTRS port indices with different values corresponding to one or more SRS resources in different SRS resource sets configured or indicated through different SRI fields based on a configuration of the network device. Then, the terminal device determines the DMRS port actually associated with each PTRS based on each DMRS port in a DMRS port group sharing a same PTRS port and the association indication between the PTRS and the DMRS port, and sends the PTRS to the network device based on the number of the actual transmission ports of the PTRS and the DMRS port actually associated with the PTRS port. As a result, it is able to implement the reliable transmission of the PTRS in a case that the scheduling mode is the MTRP transmission, and provide a condition for accurately estimating a CPE under the STxMP configuration.

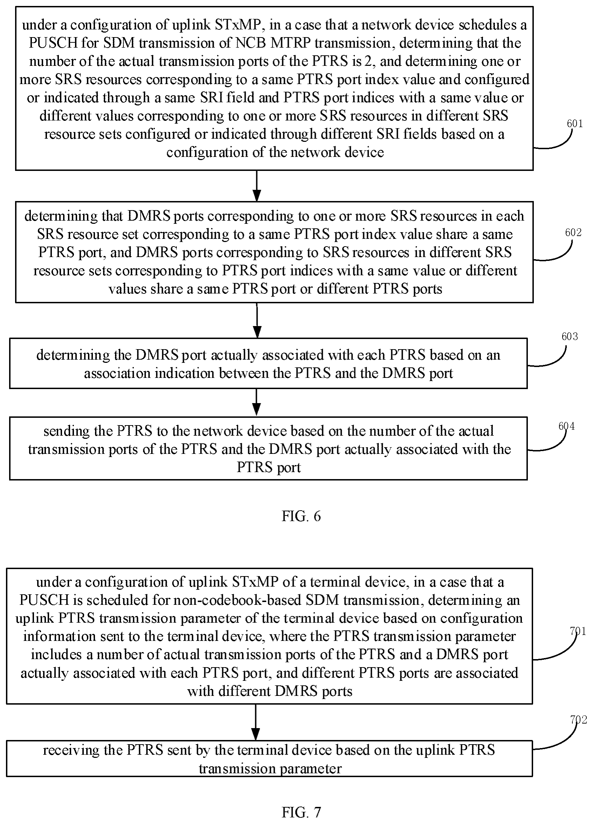

Referring to FIG. 6 which is a flow chart of another transmission method for an uplink PTRS provided in an embodiment of the present disclosure, the transmission method is executed by a terminal device. As shown in FIG. 6, the transmission method includes, but not limited to, the following steps.

Step 601: under a configuration of uplink STxMP, in a case that the network device schedules a PUSCH for SDM transmission of NCB MTRP transmission, the terminal device determines that the number of the actual transmission ports of the PTRS is 2, and determines one or more SRS resources corresponding to a same PTRS port index value and configured or indicated through a same SRI field and PTRS port indices with a same value or different values corresponding to one or more SRS resources in different SRS resource sets configured or indicated through different SRI fields based on a configuration of the network device.

Optionally, different SRS resource sets are associated with a panel, a TRP or a PUSCH TO on beam information.

In other words, different SRS resource sets are associated with PUSCH TOs sent on different panels in different TRP directions, and different directions correspond to beam information corresponding to different TCI states. For example, a first SRS resource set is associated with a first TCI state/a first TRP, i.e., a corresponding PUSCH TO is sent to TRP1. A second SRS resource set is associated with a second TCI state/a second TRP, i.e., a corresponding PUSCH TO is sent to TRP2. An association between the SRS resource set and the TCI state/TRP is determined based on different code points in the SRS resource set indicator in DCI.

In the embodiments of the present disclosure, during the MTRP transmission, the terminal device also performs dynamic handover between the STRP transmission and the MTRP transmission based on a dynamic indication of the SRS resource set indicator. In a case of determining the number of the actual transmission ports of the uplink PTRS, the terminal device at first determines whether the current transmission is the STRP transmission or the MTRP transmission. In a case that the SRS resource set indicator indicates the MTRP transmission, the terminal device performs filtration on the PTRS port index values corresponding to one or more SRS resources in each SRS resource set configured by the network device, and then determines the number of the actual transmission ports of the PTRS based on the filtered PTRS port index value.

For example, in a case that Lmax=2 on each panel and a scheduling mode is the MTRP transmission, the terminal device determines the SRS resource set associated with each SRI field based on a code point in the SRS resource set indicator configured by the network device. For example, in a case that the code point in the SRS resource set indicator is 10, the terminal device determines that the first SRI field and the second SRI field are associated with the first SRS resource set and the second SRS resource set respectively. The first SRS resource set associated with the first SRI field configured by the network device includes four SRS resources, i.e., SRS resource #0, SRS resource #1, SRS resource #2 and SRS resource #3, and ptrs-PortIndex corresponding to the four SRS resources are index0, index1, index1 and index1. The second SRS resource set associated with the second SRI field configured by the network device includes four SRS resources, i.e., SRS resource #4, SRS resource #5, SRS resource #6 and SRS resource #7, and the PTRS port index values corresponding to the four SRS resources are index0, index1, index1 and index0. At this time, the PTRS port index values corresponding to the SRS resources in different SRS resource sets include index0 and index1, so the DMRS ports sharing a same PTRS port may correspond to different panels. Generally, different panels correspond to different CEP estimates, and the estimation is performed using an independent PTRS port, so this situation is not reasonable. In addition, even based on a network configuration, the number of PTRSs on the panels actually corresponding to SRI1 and SRI2 may be not the same. Hence, in a case that a scheduling mode is the SDM transmission of the MTRP transmission, the terminal device determines that the first SRI field is merely used to configure or indicate one or more SRS resources corresponding to index0 (or index1), and the PTRS port index value corresponding to one or more SRS resources configured or indicated through the second SRI field is the same as or different from the PTRS port index value corresponding to one or more SRS resources configured or indicated through the first SRI field.

For example, in a case that the first SRI field is 5, based on the meaning of the SRI field in a column of N_{SRS}=4 in Table 4, the first SRI field specifically indicates SRS resource #0 and SRS resource #2, i.e., the number of the PTRS ports actually corresponding to SRI1 is 2 (index0 and index1). In a case that the second SRI field is 7, referring to Table 4, the second SRI field specifically indicates SRS resource #5 and SRS resource #6, i.e., the number of the PTRS ports actually corresponding to SRI2 is 1 (index1). The first SRI field is used to configure or indicate the SRS resources corresponding to index0 and the second SRI field is used to configure or indicate the SRS resources corresponding to index1. In a case that the first SRI field is 5, the terminal device determines that SRS resource #0 and SRS resource #2 indicated through the first SRI field both correspond to PTRS index0, and in a case that the second SRI field is 7, SRS resource #5 and SRS resource #6 indicated through the second SRI field both correspond to PTRS index1.

Alternatively, the first SRI field is used to configure or indicate the SRS resources corresponding index0, and the second SRI field is used to configure or indicate the SRS resources corresponding to index0. In a case that the first SRI field is 5 and the second SRI field is 7, the terminal device determines that SRS resource #0 and SRS resource #2 configured or indicated through the first SRI field both correspond to PTRS index0, and SRS resource #5 and SRS resource #6 configured or indicated through the second SRI field also correspond to PTRS index0.

In other words, the terminal device determines that, in a case that the scheduling mode is the SDM transmission of the MTRP transmission, the number of the actual transmission ports of the PTRS is 2.

In some possible embodiments of the present disclosure, in a case that one or more SRS resources configured or indicated through one SRI field merely correspond to one PTRS port index value, the terminal device determines one or more SRS resources corresponding to a same PTRS port index value or different PTRS port index values configured or indicated through another SRI field.

For example, in a case that the first SRI field is 7, referring to Table 4, the first SRI field indicates SRS resource #1 and SRS resource #2, and the two SRS resources both correspond to PTRS index1. In a case that the second SRI field is 8, referring to Table 4, the second SRI field indicates SRS resource #5 and SRS resource #7, and the two SRS resources correspond to PTRS index1 and index0 respectively. Hence, the terminal device determines that all the SRS resources or one or more SRS resources configured or indicated through the first SRI field (e.g., SRS resource #1 and SRS resource #2) in the first SRS resource set correspond to PTRS index1, and all the SRS resources or one or more SRS resources configured or indicated through the second SRI field (e.g., SRS resource #5 and SRS resource #7) in the second SRS resource set correspond to PTRS index1 or PTRS index0.

In some possible embodiments of the present disclosure, in a case that PTRS port index values corresponding to one or more SRS resources configured or indicated through two SRI fields are not unique, a PTRS port index value corresponding to one or more SRS resources configured or indicated through each SRI field is determined in a predefined manner.

For example, the predefined manner includes that the PTRS port index value corresponding to one or more SRS resources configured or indicated through the first SRI field is index0, and the PTRS port index value corresponding to one or more SRS resources configured or indicated through the second SRI field is index0. In a case that the first SRI field is 5 and the second SRI field is 8, i.e., the first SRI field indicates SRS resource #0 (corresponding to PTRS index0) and SRS resource #2 (corresponding to PTRS index1) and the second SRI field indicates SRS resource #5 (corresponding to PTRS index1) and SRS resource #7 (corresponding to PTRS index0), the terminal device determines that all the SRS resources or the one or more SRS resources configured or indicated through the first SRI field (e.g., SRS resource #0 and SRS resource #2) in the first SRS resource set correspond to PTRS index0, and all the SRS resources or the one or more SRS resources configured or indicated through the second SRI field (e.g., SRS resource #5 and SRS resource #7) in the second SRS resource set correspond to PTRS index0.

In some possible embodiments of the present disclosure, in a case that PTRS port index values corresponding to one or more SRS resources configured or indicated through two SRI fields are unique, the PTRS port index value corresponding to one or more SRS resources configured or indicated through each SRI field is used.

Taking the above-mentioned configuration of each SRS resource set as an example, the first SRI field is 7 and the second SRI field is 6. The first SRI field configures or indicates SRS resource #1 and SRS resource #2, and the two SRS resources both correspond to PTRS index1. The second SRI field configures or indicates SRS resource #4 and SRS resource #7, and the two SRS resources both correspond to PTRS index0. The terminal device determines that the PTRS port index value corresponding to all the SRS resources or one or more SRS resources configured or indicated through the first SRI field in the first SRS resource set is index1, and the PTRS port index value corresponding to all the SRS resources or one or more SRS resources configured or indicated through the second SRI field in the second SRS resource set is index0.

Step 602: the terminal device determines that DMRS ports corresponding to one or more SRS resources in each SRS resource set corresponding to a same PTRS port index value share a same PTRS port, and DMRS ports corresponding to SRS resources in different SRS resource sets corresponding to PTRS port indices with a same value or different values share a same PTRS port or different PTRS ports.

Step 603: the terminal device determines the DMRS port actually associated with each PTRS based on the association indication between the PTRS and the DMRS port.

Step 604: the terminal device sends the PTRS to the network device based on the number of the actual transmission ports of the PTRS and the DMRS port actually associated with the PTRS port.

The implementation of Steps 602 and 604 may refer to that mentioned hereinabove in the other embodiments of the present disclosure, and thus will not be particularly defined herein.

In the embodiments of the present disclosure, under the STxMP configuration, in a case that the network device schedules the PUSCH for the SDM transmission of the NCB MTRP transmission, the terminal device determines the one or more SRS resources corresponding to a same PTRS port index and configured or indicated through a same SRI field and PTRS port indices with a same value or different values corresponding to one or more SRS resources in different SRS resource sets configured or indicated through different SRI fields based on a configuration of the network device. Then, the terminal device determines the DMRS port actually associated with each PTRS based on each DMRS port in a DMRS port group sharing a same PTRS port and the association indication between the PTRS and the DMRS port, and sends the PTRS to the network device based on the number of the actual transmission ports of the PTRS and the DMRS port actually associated with the PTRS port. As a result, it is able to implement the reliable transmission of the PTRS in a case that the scheduling mode is the MTRP transmission, and provide a condition for accurately estimating a CPE under the STxMP configuration.

Referring to FIG. 7 which is a flow chart of another transmission method for an uplink PTRS provided in an embodiment of the present disclosure, the transmission method is executed by a network device. As shown in FIG. 7, the transmission method includes, but not limited to, the following steps.

Step 701: under a configuration of uplink STxMP of a terminal device, in a case that a PUSCH is scheduled for non-codebook-based SDM transmission, the network device determines an uplink PTRS transmission parameter of the terminal device based on configuration information sent to the terminal device. The PTRS transmission parameter includes a number of actual transmission ports of the PTRS and a DMRS port actually associated with each PTRS port, and different PTRS ports are associated with different DMRS ports.

Optionally, a type of the PUSCH transmission includes any one of: scheduled PUSCH, grant-free type 1 PUSCH, and grant-free type 2 PUSCH.

Optionally, the configuration information at least includes a maximum number of PTRS ports, an association indication between the PTRS and the DMRS port, and DMRS port configuration information.

In some possible embodiments of the present disclosure, the maximum number of PTRS ports is sent by the network device via a RRC message, and the association indication between the PTRS and the DMRS port and the DMRS port configuration information are sent by the network device via DCI signaling, which will not be particularly defined herein.

In some possible embodiments of the present disclosure, under the STxMP configuration, in a case that a scheduling mode is STRP transmission, a maximum value of the maximum number of PTRS ports is 2; in a case that a scheduling mode is Single Frequency Network (SFN) transmission of MTRP transmission, the maximum value of the maximum number of PTRS ports is 1 or 2; and in a case that a scheduling mode is SDM transmission of the MTRP transmission, the maximum value of the maximum number of PTRS ports is 2.

In some possible embodiments of the present disclosure, one piece of the maximum number of PTRS ports is configured, and the one piece of the maximum number of PTRS ports is used for STRP transmission, SFN transmission and SDM transmission. In other words, the network device configures the one piece of the maximum number of PTRS ports for the terminal device.

In other words, with respect to the STRP transmission, the SFN transmission and the SDM transmission, the same maximum number of PTRS ports is used by the terminal device, and at this time, a maximum value of the maximum number of PTRS ports is 2.

In some possible embodiments of the present disclosure, two pieces of the maximum number of PTRS ports are configured, one of the two pieces of the maximum number of PTRS ports is used for STRP transmission, the other of the two pieces of the maximum number of PTRS ports is used for MTRP transmission under STxMP, and the MTRP transmission under STxMP at least includes SFN transmission and SDM transmission.

In other words, with respect to the STRP transmission, the SFN transmission and the SDM transmission, the network device sends two pieces of the maximum number of PTRS ports, and the maximum number of PTRS ports for the MTRP transmission under STxMP is independent of the maximum number of PTRS ports for the STRP transmission. The two parameters are sent by the network device via one piece of signaling or two pieces of signaling, which will not be particularly defined herein.

Optionally, a maximum value of the maximum number of PTRS ports corresponding to the STRP transmission is 2, and a maximum value of the maximum number of PTRS ports corresponding to the SFN transmission and the SDM transmission is also 2.

In some possible embodiments of the present disclosure, at least three pieces of the maximum number of PTRS ports are configured, one of the at least three pieces of the maximum number of PTRS ports is used for STRP transmission, another of the at least three pieces of the maximum number of PTRS ports is used for SDM transmission, and another of the at least three pieces of the maximum number of PTRS ports is used for SFN transmission.

In other words, with respect to the STRP transmission, the SFN transmission and the SDM transmission, the network device configures at least three pieces of the maximum number of PTRS ports, and these three parameters are sent by the network device via one piece of signaling or three pieces of signaling, which will not be particularly defined herein.

Optionally, a maximum value of the maximum number of PTRS ports corresponding to the STRP transmission is 2, a maximum value of the maximum number of PTRS ports corresponding to the SDM transmission of the MTRP transmission is also 2, and a maximum value of the maximum number of PTRS ports corresponding to the SFN transmission of the MTRP transmission is 1 or 2.

Optionally, the association indication between the PTRS and the DMRS port is shown in the above Table 1 and Table 2. In other words, the association indication between the PTRS and the DMRS port in a case that the PTRS has a single port is different from the association indication between the PTRS and the DMRS port in a case that the PTRS has double ports.

In some embodiments of the present disclosure, the DMRS port configuration information includes a type of the DMRS port, a number of the DMRS ports, DMRS port group information, an antenna port corresponding to the DMRS port, etc., which will not be particularly defined herein.

Optionally, the number of the actual transmission ports of the PTRS determined by the network device based on a predetermined rule and the configured information sent to the terminal device is 0, 1 or 2.

In some possible embodiments of the present disclosure, in a case that the maximum value of the maximum number of PTRS ports is 1, the number of the actual transmission ports of the PTRS determined by the network device is 0 or 1.

Optionally, in a case that no PTRS is configured for the terminal device in a high-layer parameter DMRS-UplinkConfig, the number of the actual transmission ports of the PTRS determined by the network device is 0, i.e., no uplink PTRS is transmitted. In a case that a parameter UL-PTRS-present is configured by the network device for the terminal device and the maximum value of the maximum number of PTRS ports is 1, the number of the actual transmission ports of the PTRS determined by the network device is 0 or 1.

In some possible embodiments of the present disclosure, in a case that the maximum value of the maximum number of PTRS ports is 2, the number of the actual transmission ports of the PTRS determined by the network device is 0, 1 or 2.

Optionally, in a case that no PTRS is configured for the terminal device in the high-layer parameter DMRS-UplinkConfig, the number of the actual transmission ports of the PTRS determined by the network device is 0, i.e., no uplink PTRS is transmitted. In a case that the parameter UL-PTRS-present is configured by the network device for the terminal device and the maximum value of the maximum number of PTRS ports is 2, the number of the actual transmission ports of the PTRS determined by the network device is 0, 1 or 2.

Optionally, the number of DMRS ports actually associated with each PTRS port is one or several, and different PTRS ports are associated with different DMRS ports, which will not be particularly defined herein.

In some possible embodiments of the present disclosure, the predetermined rule is a rule for assisting the terminal device to determine the uplink PTRS transmission parameter, and it is determined by the network device based on an agreement.

Optionally, the network device also configures the predetermined rule for the terminal device, e.g., sends the predetermined rule to the terminal device via a RRC message, which will not be particularly defined herein.

Step 702: the network device receives the PTRS sent by the terminal device based on the uplink PTRS transmission parameter.

In the embodiments of the present disclosure, under the configuration of STxMP, in a case that the PUSCH is scheduled for the NCB SDM transmission, the network device determines the PTRS transmission parameter based on the sent configuration information and the predetermined rule, and then sends the PTRS based on the PTRS transmission parameter. As a result, it is able to implement the reliable transmission of the PTRS, and provide a condition for accurately estimating a CPE under the STxMP configuration.

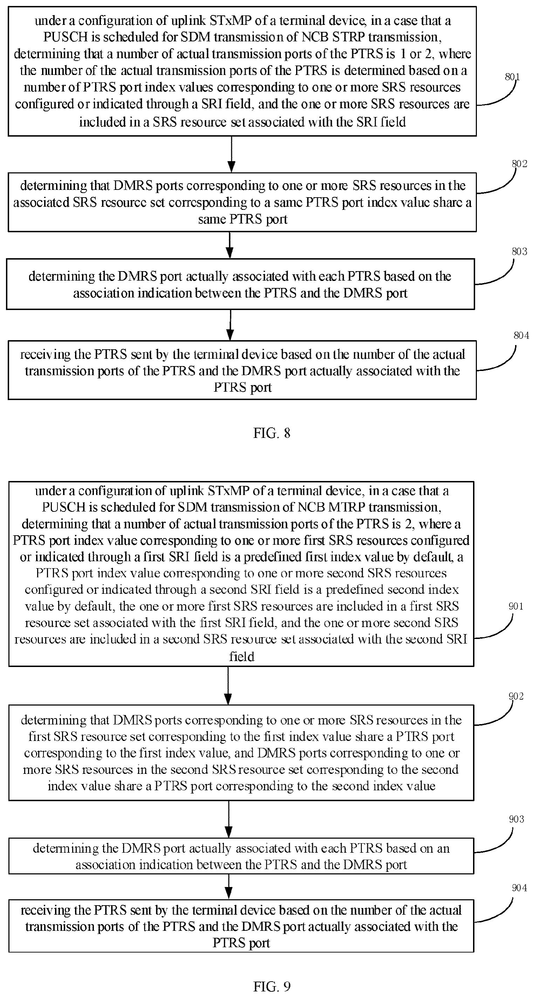

Referring to FIG. 8 which is a flow chart of another transmission method for an uplink PTRS provided in an embodiment of the present disclosure, the transmission method is executed by a network device. As shown in FIG. 8, the transmission method includes, but not limited to, the following steps.

Step 801: under a configuration of uplink STxMP of a terminal device, in a case that a PUSCH is scheduled for SDM transmission of NCB STRP transmission, the network device determines that a number of actual transmission ports of the PTRS is 1 or 2. The number of the actual transmission ports of the PTRS is determined based on a number of PTRS port index values corresponding to one or more SRS resources configured or indicated through a SRI field, and the one or more SRS resources are included in a SRS resource set associated with the SRI field.

Optionally, with respect to the grant-free PUSCH transmission, the network device determines the number of the actual transmission ports of the PTRS based on the number of PTRS port index values corresponding to the one or more SRS resources configured through the SRI field, and with respect to the scheduled PUSCH, the network device determines the number of the actual transmission ports of the PTRS based on the number of PTRS port index values corresponding to the one or more SRS resources indicated through the SRI field.

In the embodiments of the present disclosure, although the STxMP configuration is configured by the network device for the terminal device, during the MTRP transmission, a SRS resource set indicator is further used to dynamically indicate dynamic handover between the STRP transmission and the MTRP transmission, and indicate a specific SRS resource set associated with the PUSCH transmission. In this way, in a case that the SRS resource set indicator indicates the STRP transmission, the network device determines the number of the actual transmission ports of the PTRS based on the number of the PTRS port index values corresponding to the one or more SRS resources configured or indicated through the SRI field.

For example, in a case that the SRS resource set indicator dynamically indicates the STRP transmission, three SRS resources are configured or indicated through the SRI field, and the PTRS port index values (ptrs-PortIndex) corresponding to the three SRS resources are index0, index1 and index0. In other words, the SRS resources in the SRS resource set associated with the SRI field correspond to two PTRS port index values, i.e., index0 and index1, so the network device determines that the number of the actual transmission ports of the PTRS is 2.

In other words, in a case that a scheduling mode is the STRP transmission, the number of the actual transmission ports of the PTRS is determined based on the number of the PTRS port index values corresponding to the SRS resources in the SRS resource set associated with the configured SRI field.

Optionally, different SRS resource sets are associated with a panel, a TRP or a PUSCH TO on beam information.

Different SRS resource sets are associated with PUSCH TOs transmitted on different panels in different TRP directions, and different directions correspond to beam information corresponding to different Transmission Configuration Indication (TCI) states. For example, a first SRS resource set is associated with a first TCI state/a first TRP, i.e., a corresponding PUSCH TO is sent to TRP1. A second SRS resource set is associated with a second TCI state/a second TRP, i.e., a corresponding PUSCH TO is sent to TRP2. An association between the SRS resource set and the TCI state/TRP is determined based on different code points in the SRS resource set indicator in DCI.

Step 802: the network device determines that DMRS ports corresponding to one or more SRS resources in the associated SRS resource set corresponding to a same PTRS port index value share a same PTRS port.

Based on the above instance, in a case that the maximum number of ranks Lmax=3 and the SRS resource set associated with the SRI field configured by the network device includes three SRS resources, i.e., SRS resource #0, SRS resource #1 and SRS resource #2, the PTRS port index values corresponding to the three SRS resources are index0, index1 and index0, and the DMRS ports corresponding to the three SRS resources are DMRS port #0, DMRS port #1 and DMRS port #2. In a case that a value of a bit field mapped to a SRS resource index in the SRI field is 6 (i.e., the SRI field is 6), with reference to the SRI field in a column of N_{SRS}=3 in Table 5, the SRI field specifically indicates SRS resource #0, SRS resource #1 and SRS resource #2, and the DMRS ports corresponding to the SRS resources indicated through the SRI field are DMRS port #0, DMRS port #1 and DMRS port #2. The terminal device determines that the two DMRS ports (DMRS port #0 and DMRS port #2) corresponding to SRS resource #0 and SRS resource #2 share the PTRS port index value index0, and the DMRS port (DMRS port #1) corresponding to SRS resource #1 and the PTRS port having a port index value of index1 share an antenna port.

Alternatively, in a case that the maximum number of ranks Lmax=3 and the SRS resource set associated with the SRI field configured by the network device includes four SRS resources, i.e., SRS resource #0, SRS resource #1, SRS resource #2 and SRS resource #3, the PTRS port index values corresponding to the four SRS resources are index0, index1, index1 and index0, and the DMRS ports corresponding to the four SRS resources are DMRS port #0, DMRS port #1, DMRS port #2 and DMRS port #3. In a case that the SRI indication is equal to 11, with reference to the SRI field in a column of N_{SRS}=4 in Table 5, the SRI field specifically indicates SRS resource #0, SRS resource #1 and SRS resource #3, and the DMRS ports corresponding to the SRS resources indicated through the SRI field are DMRS port #0, DMRS port #1 and DMRS port #3. The terminal device determines that DMRS port #0 and DMRS port #3 corresponding to SRS resource #0 and SRS resource #3 share the PTRS port index value index0, and DMRS port #1 corresponding to SRS resource #1 and the PTRS port having a port index value of index1 share an antenna port.

Step 803: the network device determines the DMRS port actually associated with each PTRS based on the association indication between the PTRS and the DMRS port.

In the embodiments of the present disclosure, after determining the DMRS ports sharing each PTRS port, the network device determines the DMRS port actually associated with the PTRS based on the sent association indication between the PTRS and the DMRS port (e.g., Table 1).

Based on the above instance where the SRS resource set associated with the SRI field configured by the network device includes three SRS resources, the network device has known that two DMRS ports (DMRS port #0 and DMRS port #2) share the PTRS port 0. In a case that the PTRS-DMRS association indication field has a value of 1, as shown in Table 1, the network device determines that DMRS port #2 is actually associated with the PTRS port 0.

Alternatively, based on the above instance where the SRS resource set associated with the SRI field configured by the network device includes four SRS resources, the network device has known that two DMRS ports (DMRS port #0 and DMRS port #3) share the PTRS port 0. In a case that the PTRS-DMRS association indication field has a value of 1, as shown in Table 1, the network device determines that DMRS port #3 is actually associated with the PTRS port 0.

In other words, the network device determines the DMRS port actually used in a case that the PTRS is sent in the PUSCH TO transmission based on the association indication between the PTRS and the DMRS port.

It should be appreciated that, in the above instance, the index numbers of the one or more SRS resources configured or indicated through the SRI field, a correspondence between the SRS resources and the PTRS port index numbers and a correspondence between the SRS resources and the DMRS ports are all for illustrative purposes, but shall not be construed as limiting the scheme for determining the number of the actual transmission ports of the PTRS in the embodiments of the present disclosure.

Step 804: the network device receives the PTRS sent by the terminal device based on the number of the actual transmission ports of the PTRS and the DMRS port actually associated with the PTRS port.

In the embodiments of the present disclosure, under the STxMP configuration, in a case that the PUSCH is scheduled for the NCB SDM transmission and the scheduling mode is the STRP transmission, the network device determines the number of the actual transmission ports of the PTRS based on the number of the PTRS port index values corresponding to the one or more SRS resources configured or indicated through the SRI field, determines the DMRS port actually associated with each PTRS based on the association indication between the PTRS and the DMRS port after determining one or more DMRS ports sharing a same PTRS port, and receives the PTRS sent by the terminal device based on the number of the actual transmission ports of the PTRS and the DMRS port actually associated with the PTRS port. As a result, it is able to implement the reliable transmission of the PTRS under the STxMP configuration in a case that the PUSCH scheduling mode is the SDM transmission of the STRP transmission, and provide a condition for accurately estimating a CPE under the STxMP configuration.

Referring to FIG. 9 which is a flow chart of another transmission method for an uplink PTRS provided in the embodiments of the present disclosure, the transmission method is executed by a network device. As shown in FIG. 9, the transmission method includes, but not limited to, the following steps.

Step 901: under a configuration of uplink STxMP of a terminal device, in a case that a PUSCH is scheduled for SDM transmission of NCB MTRP transmission, the network device determines that a number of actual transmission ports of the PTRS is 2. A PTRS port index value corresponding to one or more first SRS resources configured or indicated through a first SRI field is a predefined first index value by default, a PTRS port index value corresponding to one or more second SRS resources configured or indicated through a second SRI field is a predefined second index value by default, the one or more first SRS resources are included in a first SRS resource set associated with the first SRI field, and the one or more second SRS resources are included in a second SRS resource set associated with the second SRI field.

It should be appreciated that, in the embodiments of the present disclosure, the expressions "first SRS resource" and "second SRS resource" are merely used to differentiate the SRS resources from each other, but shall not be construed as limiting the SRS resource indices. In addition, the expressions "first SRS resource set" and "second SRS resource set" are also merely used to differentiate the SRS resource sets from each other, but shall not be construed as limiting the SRS resource set indices.

Optionally, the first index value is index0 and the second index value is index1; or the first index value is index1 and the second index value is index0.

Optionally, different SRS resource sets are associated with a panel, a TRP or PUSCH transmission occasion on beam information.

In other words, different SRS resource sets are associated with PUSCH TOs sent on different panels in different TRP directions, and different directions correspond to beam information corresponding to different TCI states. For example, a first SRS resource set is associated with a first TCI state/a first TRP, i.e., a corresponding PUSCH TO is sent to TRP1. A second SRS resource set is associated with a second TCI state/a second TRP, i.e., a corresponding PUSCH TO is sent to TRP2. An association between the SRS resource set and the TCI state/TRP is determined based on different code points in the SRS resource set indicator in DCI.

In the embodiments of the present disclosure, although the STxMP configuration is configured for the terminal device, during the MTRP transmission, a SRS resource set indicator is further used to dynamically indicate dynamic handover between the STRP transmission and the MTRP transmission, and indicate a specific SRS resource set associated with the PUSCH transmission. In this way, in a case that the SRS resource set indicator indicates the MTRP transmission, the network device determines that the PTRS port index value corresponding to the one or more first SRS resources configured or indicated through the first SRI field is the predefined first index value by default, and the PTRS port index value corresponding to the one or more second SRS resources configured or indicated through the second SRI field is the predefined second index value by default.

In other words, in a case that the SRS resource set indicator dynamically indicates the MTRP transmission, the network device ignores the parameter ptrs-PortIndex corresponding to all the SRS resources configured by the network device, and re-determines the PTRS port index value corresponding to one or more SRS resources configured or indicated through each SRI field.

For example, in a case that Lmax=2 on each panel and a scheduling mode is the MTRP transmission, the network device determines a SRS resource set associated with each SRI field based on a code point in the configured SRS resource set indicator. For example, in a case that the code point in the SRS resource set indicator is 10, the network device determines that the first SRI field and the second SRI field are associated with the first SRS resource set and the second SRS resource set respectively. The first SRS resource set associated with the first SRI field configured by the network device includes four SRS resources, i.e., SRS resource #0, SRS resource #1, SRS resource #2, and SRS resource #3, and parameters ptrs-PortIndex corresponding to the four SRS resources are index0, index1, index1 and index1. The second SRS resource set associated with the second SRI field includes four SRS resources, i.e., SRS resource #4, SRS resource #5, SRS resource #6 and SRS resource #7, and the PTRS port index values corresponding to the four SRS resources are index0, index1, index1 and index0. At this time, the PTRS port index values corresponding to the SRS resources in different SRS resource sets include index0 and index1, so the DMRS ports sharing a same PTRS port may correspond to different panels. Generally, different panels correspond to different CEP estimates, and the estimation is performed using an independent PTRS port, so this situation is not reasonable. In addition, even based on a network configuration, the number of PTRSs on the panels actually corresponding to SRI1 and SRI2 may be not the same. For example, in a case that the first SRI field is 5, based on the meaning of the SRI field in a column of N_{SRS}=4 in Table 4, the first SRI field specifically indicates SRS resource #0 and SRS resource #2, i.e., the number of the PTRS ports actually corresponding to SRI1 is 2 (index0 and index1). In a case that the second SRI field is 7, referring to Table 4, the second SRI field specifically indicates SRS resource #5 and SRS resource #6, i.e., the number of the PTRS ports actually corresponding to SRI2 is 1 (index1). At this time, the network device directly ignores the above-mentioned configuration of the PTRS port index, and directly determines that the PTRS port index value corresponding to two SRS resources (SRS resource #0 and SRS resource #2) merely indicated through the first SRI field in all the SRS resources in the first SRS resource set is index0 (or index1), and the PTRS port index value corresponding to two SRS resources (SRS resource #5 and SRS resource #6) merely indicated through the second SRI field in all the SRS resources in the second SRS resource set is index1 (or index0).

The network device determines that the PTRS port index values corresponding to all the SRS resources in different SRS resource sets are different, i.e., the network device determines that the number of the actual transmission ports of the PTRS corresponding to each of the two SRS resource set is 1, and the number of the actual transmission ports of the PTRS is 2.

It should be appreciated that, in the embodiments of the present disclosure, the predefined first index value is associated with the first SRI field by default, and the second predefined second index value is associated with the second SRI field by default; or the predefined first index value is associated with the first SRS resource by default, and the predefined second index value is associated with the second SRS resource by default, which will not be particularly defined herein.

Step 902: the network device determines that DMRS ports corresponding to one or more SRS resources in the first SRS resource set corresponding to the first index value share a PTRS port corresponding to the first index value, and DMRS ports corresponding to one or more SRS resources in the second SRS resource set corresponding to the second index value share a PTRS port corresponding to the second index value.

Based on the above instance, the PTRS port index values corresponding to two SRS resources (SRS resource #0 and SRS resource #2) indicated through the first SRI field in all the SRS resources in the first SRS resource set are the first index value (index0), and the PTRS port index values corresponding to two SRS resources (SRS resource #5 and SRS resource #6) indicated through the second SRI field in all the SRS resources in the second SRS resource set are the second index value (index1). At this time, in a case that a DMRS configuration type (dmrs-Type) is 1 and a maximum number of time-domain symbols allowed to be occupied (maxLength) is 2, the DMRS port configured for the terminal device is determined with reference to Table 8.

For example, in a case that a DMRS port indication value is 1, the network device determines that the DMRS ports configured for the terminal device is {0,1,4,5} based on Table 8. Then, the network device determines the DMRS port corresponding to one or more SRS resources indicated through each SRI field based on a certain rule. For example, the network device determines that the DMRS ports in different CDM groups correspond to one or more SRS resources indicated through different SRI fields.

Alternatively, it is determined that the former two DMRS ports correspond to one or more SRS resources indicated through the first SRI field, and the latter two DMRS ports correspond to one or more SRS resources indicated through the second SRI field. In other words, the two SRS resources indicated through the first SRI field correspond to DMRS port #0 and DMRS port #1, and it is already known that the PTRS port index values corresponding to SRS resource #0 and SRS resource #2 are both index0, so the it is determined that DMRS port #0 and DMRS port #1 share the PTRS port corresponding to the first index value. The two SRS resources indicated through the second SRI field correspond to DMRS port #4 and DMRS port #5, and it is already known that the PTRS port index values corresponding to SRS resource #5 and SRS resource #6 are both index1, so it is determined that DMRS port #4 and DMRS port #5 share the PTRS port corresponding to the second index value.

Alternatively, it is determined that the latter two DMRS ports correspond to one or more SRS resources indicated through the first SRI field, and the former two DMRS ports correspond to one or more SRS resources indicated through the second SRI field. In other words, the two SRS resources indicated through the first SRI field correspond to DMRS port #4 and DMRS port #5, i.e., DMRS port #4 and DMRS port #5 share the PTRS port corresponding to the first index value. The two SRS resources indicated through the second SRI field correspond to DMRS port #0 and DMRS port #1, i.e., DMRS port #0 and DMRS port #1 share the PTRS port corresponding to the second index value.

Step 903: the network device determines the DMRS port actually associated with each PTRS based on the association indication between the PTRS and the DMRS port.

In the embodiments of the present disclosure, after determining the DMRS ports sharing each PTRS port, the network device determines the DMRS port actually associated with the PTRS based on the received association indication between the PTRS and the DMRS port (e.g., Table 2).

Based on the above instance, presumed that the first index value is index0 and the second index value is index2, the terminal device determines that, in the first SRS resource set, two DMRS ports, i.e., DMRS port #0 and DMRS port #1, share the PTRS index0, and two DMRS ports, i.e., DMRS port #4 and DMRS port #5, share the PTRS index1. In a case that the PTRS-DMRS association indication field has a value of 01, i.e., a MSB has a value of 0, it is determined that the DMRS port actually associated with the PTRS port 0 is a first DMRS port in DMRS port #0 and DMRS port #1, i.e., DMRS port #0. Correspondingly, a LSB has a value of 1, so the DMRS port actually associated with the PTRS port 1 is a second DMRS port of DMRS port #4 and DMRS port #5, i.e., DMRS port #5.

In other words, the network device determines the DMRS port actually used in a case that each PTRS is sent in the PUSCH TO transmission based on the association indication between the PTRS and the DMRS port.

It should be appreciated that, in the above instance, the index numbers of the one or more SRS resources configured or indicated through the SRI field, a correspondence between the SRS resources and the PTRS port index numbers and a correspondence between the SRS resources and the DMRS ports are all for illustrative purposes, but shall not be construed as limiting the scheme for determining the number of the actual transmission ports of the PTRS in the embodiments of the present disclosure.

Step 904: the network device receives the PTRS sent by the terminal device based on the number of the actual transmission ports of the PTRS and the DMRS port actually associated with the PTRS port.

In the embodiments of the present disclosure, under the STxMP configuration of the terminal device, in a case that the network device schedules the PUSCH for the SDM transmission of the NCB MTRP transmission, the network device determines that the number of the actual transmission ports of the PTRS is 2, the PTRS port index value corresponding to the one or more first SRS resources configured or indicated through the first SRI field is the first index value, and the PTRS port index value corresponding to the one or more second SRS resources configured or indicated through the second SRI field is the second index value. After determining the one or more DMRS ports sharing the PTRS ports corresponding to the first index value and the second index value, the network device determines the DMRS port actually associated with each PTRS based on the association indication between the PTRS and the DMRS port, and receives the PTRS sent by the terminal device based on the number of the actual transmission ports of the PTRS and the DMRS port associated with the PTRS port. As a result, it is able to implement the reliable transmission of the PTRS in a case that the scheduling mode is the SDM transmission of the MTRP transmission, and provide a condition for accurately estimating a CPE under the STxMP configuration.

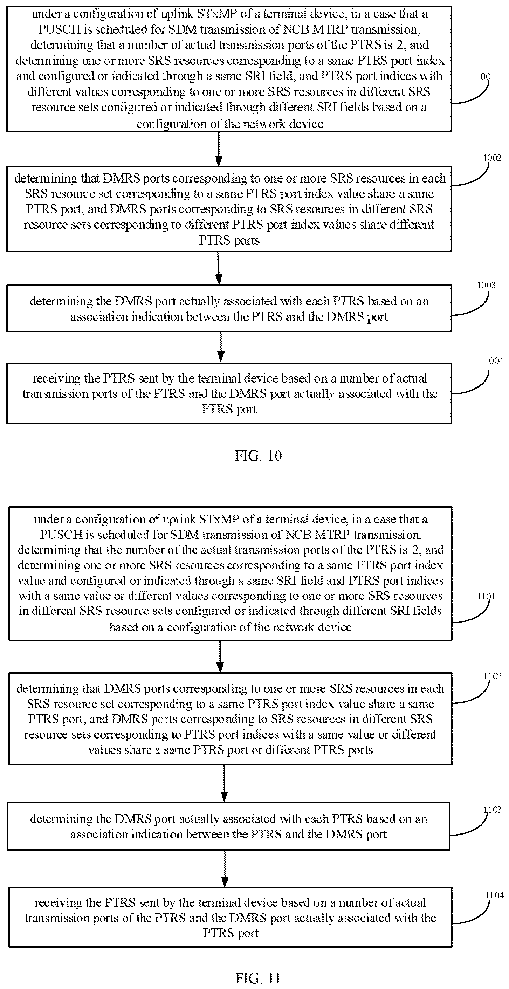

Referring to FIG. 10 which is a flow chart of another transmission method for an uplink PTRS provided in the embodiments of the present disclosure, the transmission method is executed by a network device. As shown in FIG. 10, the transmission method includes, but not limited to, the following steps.

Step 1001: under a configuration of uplink STxMP of a terminal device, in a case that a PUSCH is scheduled for SDM transmission of NCB MTRP transmission, the network device determines that a number of actual transmission ports of the PTRS is 2, and determines one or more SRS resources corresponding to a same PTRS port index and configured or indicated through a same SRI field, and PTRS port indices with different values corresponding to one or more SRS resources in different SRS resource sets configured or indicated through different SRI fields based on a configuration of the network device.

Different SRS resource sets are associated with a panel, a TRP or a PUSCH TO on beam information.

In other words, different SRS resource sets are associated with PUSCH TOs sent on different panels in different TRP directions, and different directions correspond to beam information corresponding to different TCI states. For example, a first SRS resource set is associated with a first TCI state/a first TRP, i.e., a corresponding PUSCH TO is sent to TRP1. A second SRS resource set is associated with a second TCI state/a second TRP, i.e., a corresponding PUSCH TO is sent to TRP2. An association between the SRS resource set and the TCI state/TRP is determined based on different code points in the SRS resource set indicator in DCI.

In the embodiments of the present disclosure, during the MTRP transmission, the network device also performs dynamic handover between the STRP transmission and the MTRP transmission based on a dynamic indication of the SRS resource set indicator. In a case of determining the number of the actual transmission ports of the PTRS, the network device at first determines whether the current transmission is the STRP transmission or the MTRP transmission. In a case that the SRS resource set indicator indicates the MTRP transmission, filtration is performed on the PTRS port index values corresponding to one or more SRS resources in each SRS resource set configured by the network device, and then the number of the actual transmission ports of the PTRS is determined based on the filtered PTRS port index value.

For example, in a case that Lmax=2 on each panel and a scheduling mode is the MTRP transmission, the network device determines the SRS resource set associated with each SRI field based on a code point in the SRS resource set indicator configured by the network device. For example, in a case that the code point in the SRS resource set indicator is 10, the network device determines that the first SRI field and the second SRI field are associated with the first SRS resource set and the second SRS resource set respectively. The first SRS resource set associated with the first SRI field configured by the network device includes four SRS resources, i.e., SRS resource #0, SRS resource #1, SRS resource #2 and SRS resource #3, and ptrs-PortIndex corresponding to the four SRS resources are index0, index1, index1 and index1. The second SRS resource set associated with the second SRI field configured by the network device includes four SRS resources, i.e., SRS resource #4, SRS resource #5, SRS resource #6 and SRS resource #7, and the PTRS port index values corresponding to the four SRS resources are index0, index1, index1 and index0. At this time, the PTRS port index values corresponding to the SRS resources in different SRS resource sets include index0 and index1, so the DMRS ports sharing a same PTRS port may correspond to different panels. Generally, different panels correspond to different CEP estimates, and the estimation is performed using an independent PTRS port, so this situation is not reasonable. In addition, even based on a network configuration, the number of PTRSs on the panels actually corresponding to SRI1 and SRI2 may be not the same. Hence, in a case that a scheduling mode is the SDM transmission of the MTRP transmission, the network device determines that the first SRI field is merely used to configure or indicate one or more SRS resources corresponding to index0 (or index1), and the second SRI field is merely used to configure or indicate one or more SRS resources corresponding to index1 (or index0).

For example, in a case that the first SRI field is 5, based on the meaning of the SRI field in a column of N_{SRS}=4 in Table 4, the first SRI field specifically indicates SRS resource #0 and SRS resource #2, i.e., the number of the PTRS ports actually corresponding to SRI1 is 2 (index0 and index1). In a case that the second SRI field is 7, referring to Table 4, the second SRI field specifically indicates SRS resource #5 and SRS resource #6, i.e., the number of the PTRS ports actually corresponding to SRI2 is 1 (index1). The first SRI field is merely used to configure or indicate the SRS resources corresponding to index0 and the second SRI field is merely used to configure or indicate the SRS resources corresponding to index1. In a case that the first SRI field is 5, the network device determines that SRS resource #0 and SRS resource #2 indicated through the first SRI field both correspond to PTRS index0, and in a case that the second SRI field is 7, SRS resource #5 and SRS resource #6 indicated through the second SRI field both correspond to PTRS index1.

In other words, the network device determines that, in a case that the scheduling mode is the SDM transmission of the MTRP transmission, the number of the actual transmission ports of the PTRS is 2.

In some possible embodiments of the present disclosure, in a case that one or more SRS resources configured or indicated through one SRI field merely correspond to one PTRS port index value, one or more SRS resources correspond to another PTRS port index value and configured or indicated through another SRI field are determined.

For example, in a case that the first SRI field is 7, referring to Table 4, the first SRI field indicates SRS resource #1 and SRS resource #2, and the two SRS resources both correspond to PTRS index1. In a case that the second SRI field is 8, referring to Table 4, the second SRI field indicates SRS resource #5 and SRS resource #7, and the two SRS resources correspond to PTRS index1 and index0 respectively. Hence, it is determined that all the SRS resources or one or more SRS resources configured or indicated through the first SRI field in the first SRS resource set correspond to PTRS index1, and all the SRS resources or one or more SRS resources configured or indicated through the second SRI field in the second SRS resource set correspond to PTRS index0.

In some possible embodiments of the present disclosure, in a case that PTRS port index values corresponding to one or more SRS resources configured or indicated through two SRI fields are not unique, a PTRS port index value corresponding to one or more SRS resources configured or indicated through each SRI field is determined in a predefined manner.

For example, the predefined manner includes that the PTRS port index value corresponding to one or more SRS resources configured or indicated through the first SRI field is index0, and the PTRS port index value corresponding to one or more SRS resources configured or indicated through the second SRI field is index1. In a case that the first SRI field is 5 and the second SRI field is 8, i.e., the first SRI field indicates SRS resource #0 (corresponding to PTRS index0) and SRS resource #2 (corresponding to PTRS index1) and the second SRI field indicates SRS resource #5 (corresponding to PTRS index1) and SRS resource #7 (corresponding to PTRS index0), it is determined that all the SRS resources or the one or more SRS resources configured or indicated through the first SRI field (e.g., SRS resource #0 and SRS resource #2) in the first SRS resource set correspond to PTRS index0, and all the SRS resources or the one or more SRS resources configured or indicated through the second SRI field in the second SRS resource set correspond to PTRS index1.

Alternatively, it is determined that SRS resource #0 and SRS resource #2 configured or indicated through the first SRI field correspond to PTRS index1, and SRS resource #5 and SRS resource #7 configured or indicated through the second SRI field correspond to PTRS index0.

In some possible embodiments of the present disclosure, in a case that PTRS port index values corresponding to one or more SRS resources configured or indicated through two SRI fields are unique, the PTRS port index value corresponding to one or more SRS resources configured or indicated through each SRI field is used.

Taking the above-mentioned configuration of each SRS resource set as an example, the first SRI field is 7 and the second SRI field is 6. The first SRI field configures or indicates SRS resource #1 and SRS resource #2, and the two SRS resources both correspond to PTRS index1. The second SRI field configures or indicates SRS resource #4 and SRS resource #7, and the two SRS resources both correspond to PTRS index0. It is determined that the PTRS port index value corresponding to all the SRS resources or one or more SRS resources configured or indicated through the first SRI field in the first SRS resource set is index1, and the PTRS port index value corresponding to all the SRS resources or one or more SRS resources configured or indicated through the second SRI field in the second SRS resource set is index0.

Step 1002: the network device determines that DMRS ports corresponding to one or more SRS resources in each SRS resource set corresponding to a same PTRS port index value share a same PTRS port, and DMRS ports corresponding to SRS resources in different SRS resource sets corresponding to different PTRS port index values share different PTRS ports.

Based on the above-mentioned instance, the first SRI field configures or indicates SRS resource #0 corresponding to PTRS index0, and the second SRI field configures or indicates SRS resource #5 and SRS resource #6 corresponding to PTRS index1. In addition, a DMRS configuration type (dmrs-type) is 1 and a maximum number of time-domain symbols allowed to be occupied (maxLength) is 2. At this time, referring to Table 8, the DMRS port configured for the terminal device is determined.

For example, in a case that a DMRS port indication value is 1, the network device determines that the DMRS ports configured by the network device for the terminal device is {0,1,4,5} based on Table 8. Then, the network device determines the DMRS port corresponding to one or more SRS resources indicated through each SRI field based on a certain rule.

For example, the network device determines that the DMRS ports in different CDM groups correspond to one or more SRS resources indicated through different SRI fields.

Alternatively, the network device determines that the former two DMRS ports correspond to one or more SRS resources indicated through the first SRI field, and the latter two DMRS ports correspond to one or more SRS resources indicated through the second SRI field. In other words, the two SRS resources indicated through the first SRI field correspond to DMRS port #0 and DMRS port #1, and it is already known that the PTRS port index values corresponding to SRS resource #0 and SRS resource #2 are both index0, so the network device determines that DMRS port #0 and DMRS port #1 share the PTRS index0. The two SRS resources indicated through the second SRI field (SRS resource #5 and SRS resource #6) correspond to DMRS port #4 and DMRS port #5, and it is already known that the PTRS port index values corresponding to SRS resource #5 and SRS resource #6 are both index1, so the network device determines that DMRS port #4 and DMRS port #5 share the PTRS index1.

Alternatively, the network device determines that the latter two DMRS ports correspond to one or more SRS resources indicated through the first SRI field, and the former two DMRS ports correspond to one or more SRS resources indicated through the second SRI field. In other words, the two SRS resources indicated through the first SRI field (SRS resource #0 and SRS resource #2) correspond to DMRS port #4 and DMRS port #5, i.e., DMRS port #4 and DMRS port #5 share the PTRS index0. The two SRS resources indicated through the second SRI field (SRS resource #5 and SRS resource #6) correspond to DMRS port #0 and DMRS port #1, i.e., DMRS port #0 and DMRS port #1 share the PTRS index1.

Step 1003: the network device determines the DMRS port actually associated with each PTRS based on the association indication between the PTRS and the DMRS port.

In the embodiments of the present disclosure, after determining the DMRS ports sharing each PTRS port, the network device determines the DMRS port actually associated with the PTRS based on the received association indication between the PTRS and the DMRS port (e.g., Table 2).

Based on the above instance, the network device has known that the DMRS ports sharing PTRS index0 include DMRS port #0 and DMRS port #1, and the DMRS ports sharing PTRS index1 include DMRS port #4 and DMRS port #5. In a case that the PTRS-DMRS association indication field has a value of 01, i.e., a MSB has a value of 0, the network device determines that the DMRS port actually associated with PTRS index0 is a first DMRS port in DMRS port #0 and DMRS port #1, i.e., the DMRS port actually associated with PTRS index0 is DMRS port #0. Correspondingly, a LSB has a value of 1, so the DMRS port actually associated with the PTRS port 1 is a second DMRS port of DMRS port #4 and DMRS port #5, i.e., DMRS port #5.

In other words, the network device determines the DMRS port actually used in a case that each PTRS is sent in the PUSCH TO transmission based on the association indication between the PTRS and the DMRS port.

It should be appreciated that, in the above instance, the index numbers of the one or more SRS resources configured or indicated through the SRI field, a correspondence between the SRS resources and the PTRS port index numbers and a correspondence between the SRS resources and the DMRS ports are all for illustrative purposes, but shall not be construed as limiting the scheme for determining the number of the actual transmission ports of the PTRS in the embodiments of the present disclosure.

Step 1004: the network device receives the PTRS sent by the terminal device based on the uplink PTRS transmission parameter.

In the embodiments of the present disclosure, under the STxMP configuration of the terminal device, in a case that the network device schedules the PUSCH for the SDM transmission of the NCB MTRP transmission, the network device determines the one or more SRS resources corresponding to a same PTRS port index and configured or indicated through a same SRI field and PTRS port indices with different values corresponding to one or more SRS resources in different SRS resource sets configured or indicated through different SRI fields based on a configuration of the network device. Then, the network device determines the DMRS port actually associated with each PTRS based on each DMRS port in a DMRS port group sharing a same PTRS port and the association indication between the PTRS and the DMRS port, and receives the PTRS sent by the terminal device based on the uplink PTRS transmission parameter. As a result, it is able to implement the reliable transmission of the PTRS in a case that the scheduling mode is the MTRP transmission, and provide a condition for accurately estimating a CPE under the STxMP configuration.

Referring to FIG. 11 which is a flow chart of another transmission method for an uplink PTRS provided in an embodiment of the present disclosure, the transmission method is executed by a network device. As shown in FIG. 11, the transmission method includes, but not limited to, the following steps.

Step 1101: the network device configures a predetermined rule for a terminal device.

The implementation of Step 1101 may refer to that mentioned hereinabove in the other embodiments of the present disclosure, and thus will not be particularly defined herein.

Step 1102: under a configuration of uplink STxMP of a terminal device, in a case that a PUSCH is scheduled for SDM transmission of NCB MTRP transmission, the network device determines that the number of the actual transmission ports of the PTRS is 2, and determines one or more SRS resources corresponding to a same PTRS port index value and configured or indicated through a same SRI field and PTRS port indices with a same value or different values corresponding to one or more SRS resources in different SRS resource sets configured or indicated through different SRI fields based on a configuration of the network device.

Optionally, different SRS resource sets are associated with a panel, a TRP or a PUSCH TO on beam information.

In other words, different SRS resource sets are associated with PUSCH TOs sent on different panels in different TRP directions, and different directions correspond to beam information corresponding to different TCI states. For example, a first SRS resource set is associated with a first TCI state/a first TRP, i.e., a corresponding PUSCH TO is sent to TRP1. A second SRS resource set is associated with a second TCI state/a second TRP, i.e., a corresponding PUSCH TO is sent to TRP2. An association between the SRS resource set and the TCI state/TRP is determined based on different code points in the SRS resource set indicator in DCI.

In the embodiments of the present disclosure, during the MTRP transmission, the network device also performs dynamic handover between the STRP transmission and the MTRP transmission based on a dynamic indication of the SRS resource set indicator. In a case of determining the number of the actual transmission ports of the uplink PTRS, the network device at first determines whether the current transmission is the STRP transmission or the MTRP transmission. In a case that the SRS resource set indicator indicates the MTRP transmission, the network device performs filtration on the PTRS port index values corresponding to one or more SRS resources in each SRS resource set configured by the network device, and then determines the number of the actual transmission ports of the PTRS based on the filtered PTRS port index value.

For example, in a case that Lmax=2 on each panel and a scheduling mode is the MTRP transmission, the network device determines the SRS resource set associated with each SRI field based on a code point in the SRS resource set indicator configured by the network device. For example, in a case that the code point in the SRS resource set indicator is 10, the network device determines that the first SRI field and the second SRI field are associated with the first SRS resource set and the second SRS resource set respectively. The first SRS resource set associated with the first SRI field configured by the network device includes four SRS resources, i.e., SRS resource #0, SRS resource #1, SRS resource #2 and SRS resource #3, and ptrs-PortIndex corresponding to the four SRS resources are index0, index1, index1 and index1. The second SRS resource set associated with the second SRI field configured by the network device includes four SRS resources, i.e., SRS resource #4, SRS resource #5, SRS resource #6 and SRS resource #7, and the PTRS port index values corresponding to the four SRS resources are index0, index1, index1 and index0. At this time, the PTRS port index values corresponding to the SRS resources in different SRS resource sets include index0 and index1, so the DMRS ports sharing a same PTRS port may correspond to different panels. Generally, different panels correspond to different CEP estimates, and the estimation is performed using an independent PTRS port, so this situation is not reasonable. In addition, even based on a network configuration, the number of PTRSs on the panels actually corresponding to SRI1 and SRI2 may be not the same. Hence, in a case that a scheduling mode is the SDM transmission of the MTRP transmission, the network device determines that the first SRI field is merely used to configure or indicate one or more SRS resources corresponding to index0 (or index1), and the PTRS port index value corresponding to one or more SRS resources configured or indicated through the second SRI field is the same as or different from the PTRS port index value corresponding to one or more SRS resources configured or indicated through the first SRI field.

For example, in a case that the first SRI field is 5, based on the meaning of the SRI field in a column of N_{SRS}=4 in Table 4, the first SRI field specifically indicates SRS resource #0 and SRS resource #2, i.e., the number of the PTRS ports actually corresponding to SRI1 is 2 (index0 and index1). In a case that the second SRI field is 7, referring to Table 4, the second SRI field specifically indicates SRS resource #5 and SRS resource #6, i.e., the number of the PTRS ports actually corresponding to SRI2 is 1 (index1). The first SRI field is used to configure or indicate the SRS resources corresponding to index0 and the second SRI field is used to configure or indicate the SRS resources corresponding to index1. In a case that the first SRI field is 5, the network device determines that SRS resource #0 and SRS resource #2 indicated through the first SRI field both correspond to PTRS index0, and in a case that the second SRI field is 7, SRS resource #5 and SRS resource #6 indicated through the second SRI field both correspond to PTRS index1.

Alternatively, the first SRI field is used to configure or indicate the SRS resources corresponding index0, and the second SRI field is used to configure or indicate the SRS resources corresponding to index0. In a case that the first SRI field is 5 and the second SRI field is 7, the network device determines that SRS resource #0 and SRS resource #2 configured or indicated through the first SRI field both correspond to PTRS index0, and SRS resource #5 and SRS resource #6 configured or indicated through the second SRI field also correspond to PTRS index0.

In other words, the network device determines that, in a case that the scheduling mode is the SDM transmission of the MTRP transmission, the number of the actual transmission ports of the PTRS is 2.

In some possible embodiments of the present disclosure, in a case that one or more SRS resources configured or indicated through one SRI field merely correspond to one PTRS port index value, the network device determines one or more SRS resources corresponding to a same PTRS port index value or different PTRS port index values configured or indicated through another SRI field.

For example, in a case that the first SRI field is 7, referring to Table 4, the first SRI field indicates SRS resource #1 and SRS resource #2, and the two SRS resources both correspond to PTRS index1. In a case that the second SRI field is 8, referring to Table 4, the second SRI field indicates SRS resource #5 and SRS resource #7, and the two SRS resources correspond to PTRS index1 and index0 respectively. Hence, the network device determines that all the SRS resources or one or more SRS resources configured or indicated through the first SRI field (e.g., SRS resource #1 and SRS resource #2) in the first SRS resource set correspond to PTRS index1, and all the SRS resources or one or more SRS resources configured or indicated through the second SRI field (e.g., SRS resource #5 and SRS resource #7) in the second SRS resource set correspond to PTRS index1 or PTRS index0.

In some possible embodiments of the present disclosure, in a case that PTRS port index values corresponding to one or more SRS resources configured or indicated through two SRI fields are not unique, a PTRS port index value corresponding to one or more SRS resources configured or indicated through each SRI field is determined in a predefined manner.

For example, the predefined manner includes that the PTRS port index value corresponding to one or more SRS resources configured or indicated through the first SRI field is index0, and the PTRS port index value corresponding to one or more SRS resources configured or indicated through the second SRI field is index0. In a case that the first SRI field is 5 and the second SRI field is 8, i.e., the first SRI field indicates SRS resource #0 (corresponding to PTRS index0) and SRS resource #2 (corresponding to PTRS index1) and the second SRI field indicates SRS resource #5 (corresponding to PTRS index1) and SRS resource #7 (corresponding to PTRS index0), the network device determines that all the SRS resources or the one or more SRS resources configured or indicated through the first SRI field (e.g., SRS resource #0 and SRS resource #2) in the first SRS resource set correspond to PTRS index0, and all the SRS resources or the one or more SRS resources configured or indicated through the second SRI field (e.g., SRS resource #5 and SRS resource #7) in the second SRS resource set correspond to PTRS index0.

In some possible embodiments of the present disclosure, in a case that PTRS port index values corresponding to one or more SRS resources configured or indicated through two SRI fields are unique, the PTRS port index value corresponding to one or more SRS resources configured or indicated through each SRI field is used.

Taking the above-mentioned configuration of each SRS resource set as an example, the first SRI field is 7 and the second SRI field is 6. The first SRI field configures or indicates SRS resource #1 and SRS resource #2, and the two SRS resources both correspond to PTRS index1. The second SRI field configures or indicates SRS resource #4 and SRS resource #7, and the two SRS resources both correspond to PTRS index0. The network device determines that the PTRS port index value corresponding to all the SRS resources or one or more SRS resources configured or indicated through the first SRI field in the first SRS resource set is index1, and the PTRS port index value corresponding to all the SRS resources or one or more SRS resources configured or indicated through the second SRI field in the second SRS resource set is index0.

Step 1102: the network device determines that DMRS ports corresponding to one or more SRS resources in each SRS resource set corresponding to a same PTRS port index value share a same PTRS port, and DMRS ports corresponding to SRS resources in different SRS resource sets corresponding to PTRS port indices with a same value or different values share a same PTRS port or different PTRS ports

Step 1103: the network device determines the DMRS port actually associated with each PTRS based on the association indication between the PTRS and the DMRS port.

Step 1104: the network device receives the PTRS sent by the terminal device based on the number of the actual transmission ports of the PTRS and the DMRS port actually associated with the PTRS port.

The implementation of Steps 1102 and 1104 may refer to that mentioned hereinabove in the other embodiments of the present disclosure, and thus will not be particularly defined herein.

In the embodiments of the present disclosure, under the STxMP configuration of the terminal device, in a case that the network device schedules the PUSCH for the SDM transmission of the NCB MTRP transmission, the network device determines the one or more SRS resources corresponding to a same PTRS port index and configured or indicated through a same SRI field and PTRS port indices with a same value or different values corresponding to one or more SRS resources in different SRS resource sets configured or indicated through different SRI fields based on a configuration of the network device. Then, the network device determines the DMRS port actually associated with each PTRS based on each DMRS port in a DMRS port group sharing a same PTRS port and the association indication between the PTRS and the DMRS port, and receives the PTRS sent by the terminal device based on the number of the actual transmission ports of the PTRS and the DMRS port actually associated with the PTRS port. As a result, it is able to implement the reliable transmission of the PTRS in a case that the scheduling mode is the MTRP transmission, and provide a condition for accurately estimating a CPE under the STxMP configuration.

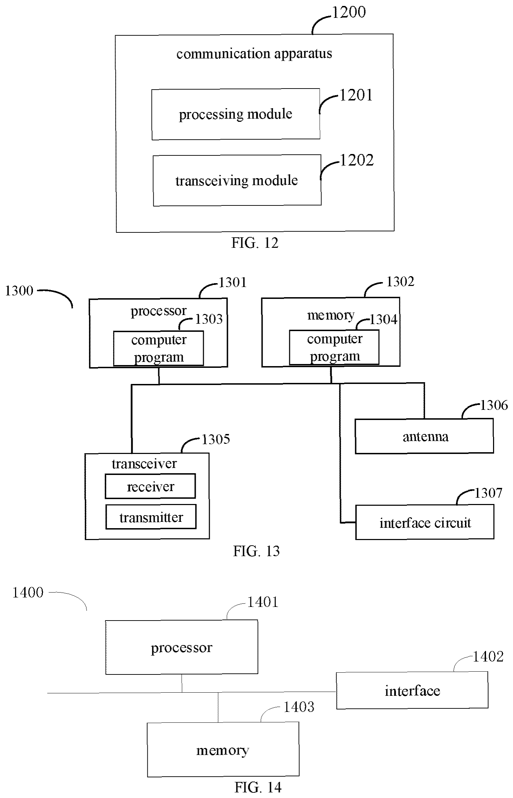

Referring to FIG. 12 which is a schematic view showing a communication apparatus provided in an embodiment of the present disclosure, the communication apparatus 1200 includes a processing module 1201 and a transceiving module 1202. The transceiving module 1202 includes a transmission module and/or a reception module, the transmission module is configured to achieve a transmission function, the reception module is configured to achieve a reception function, and the transceiving module 1202 may achieve the transmission function and/or reception function.

It should be appreciated that, the communication apparatus 1200 may be a terminal device, or an apparatus in the terminal device, or an apparatus capable of being used in combination with the terminal device.

The communication apparatus 1200 is used at a terminal device side. The processing module 1201 is configured to, under a configuration of uplink STxMP, in a case that a network device schedules a PUSCH for non-codebook-based SDM transmission, determine an uplink PTRS transmission parameter based on received configuration information, the PTRS transmission parameter includes a number of actual transmission ports of the PTRS and a DMRS port actually associated with each PTRS port, and different PTRS ports are associated with different DMRS ports. The transceiving module 1202 is configured to send the PTRS to the network device based on the uplink PTRS transmission parameter.

Optionally, the configuration information at least includes a maximum number of PTRS ports, an association indication between the PTRS and the DMRS port, and DMRS port configuration information.

Optionally, one piece of the maximum number of PTRS ports is configured, and the one piece of the maximum number of PTRS ports is used for STRP transmission, SFN transmission and SDM transmission.

Optionally, two pieces of the maximum number of PTRS ports are configured, where one of the two pieces of the maximum number of PTRS ports is used for STRP transmission, the other of the two pieces of the maximum number of PTRS ports is used for MTRP transmission under STxMP, and the MTRP transmission under STxMP at least includes SFN transmission and SDM transmission.

Optionally, at least three pieces of the maximum number of PTRS ports are configured, one of the at least three pieces of the maximum number of PTRS ports is used for STRP transmission, another of the at least three pieces of the maximum number of PTRS ports is used for SDM transmission, and another of the at least three pieces of the maximum number of PTRS ports is used for SFN transmission.

Optionally, the maximum number of PTRS ports is configured as at least one of: in a case that a scheduling mode is STRP transmission, a maximum value of the maximum number of PTRS ports is 2; in a case that a scheduling mode is SFN transmission of MTRP transmission, the maximum value of the maximum number of PTRS ports is 1 or 2; and in a case that a scheduling mode is SDM transmission of the MTRP transmission, the maximum value of the maximum number of PTRS ports is 2.

Optionally, the processing module 1201 is further configured to: in a case that the scheduling mode is the STRP transmission, determine that the number of the actual transmission ports of the PTRS is 1 or 2, the number of the actual transmission ports of the PTRS being determined based on a number of PTRS port index values corresponding to one or more SRS resources configured or indicated through a SRI field, and the one or more SRS resources being included in a SRS resource set associated with the SRI field; and determine that DMRS ports corresponding to one or more SRS resources in the associated SRS resource set corresponding to a same PTRS port index value share a same PTRS port.

Optionally, the processing module 1201 is further configured to: in a case that the scheduling mode is the SDM transmission of the MTRP transmission, determine that the number of the actual transmission ports of the PTRS is 2, a PTRS port index value corresponding to one or more first SRS resources configured or indicated through a first SRI field being a predefined first index value by default, a PTRS port index value corresponding to one or more second SRS resources configured or indicated through a second SRI field being a predefined second index value by default, the one or more first SRS resources being included in a first SRS resource set associated with the first SRI field, and the one or more second SRS resources being included in a second SRS resource set associated with the second SRI field; and determine that DMRS ports corresponding to one or more SRS resources in the first SRS resource set corresponding to the first index value share a PTRS port corresponding to the first index value, and DMRS ports corresponding to one or more SRS resources in the second SRS resource set corresponding to the second index value share a PTRS port corresponding to the second index value.

Optionally, the processing module 1201 is further configured to: in a case that the scheduling mode is the SDM transmission of the MTRP transmission, determine that the number of the actual transmission ports of the PTRS is 2, and determine one or more SRS resources corresponding to a same PTRS port index and configured or indicated through a same SRI field and PTRS port indices with different values corresponding to one or more SRS resources in different SRS resource sets configured or indicated through different SRI fields based on a configuration of the network device; and determine that DMRS ports corresponding to one or more SRS resources in each SRS resource set corresponding to a same PTRS port index value share a same PTRS port, and DMRS ports corresponding to SRS resources in different SRS resource sets corresponding to different PTRS port index values share different PTRS ports.

Optionally, the processing module 1201 is further configured to: in a case that one or more SRS resources configured or indicated through one SRI field only correspond to one PTRS port index value, determine one or more SRS resources corresponding to another PTRS port index value and configured or indicated through another SRI field; or in a case that PTRS port index values corresponding to one or more SRS resources configured or indicated through two SRI fields are not unique, determine a PTRS port index value corresponding to one or more SRS resources configured or indicated through each SRI field in a predefined manner; or in a case that PTRS port index values corresponding to one or more SRS resources configured or indicated through two SRI fields are unique, use the PTRS port index value corresponding to one or more SRS resources configured or indicated through each SRI field.

Optionally, the processing module 1201 is further configured to: in a case that the scheduling mode is the SDM transmission of the MTRP transmission, determine that the number of the actual transmission ports of the PTRS is 2, and determine one or more SRS resources corresponding to a same PTRS port index value and configured or indicated through a same SRI field and PTRS port indices with a same value or different values corresponding to one or more SRS resources in different SRS resource sets configured or indicated through different SRI fields based on a configuration of the network device; and determine that DMRS ports corresponding to one or more SRS resources in each SRS resource set corresponding to a same PTRS port index value share a same PTRS port, and DMRS ports corresponding to SRS resources in different SRS resource sets corresponding to PTRS port indices with a same value or different values share a same PTRS port or different PTRS ports.

Optionally, the processing module 1201 is further configured to: in a case that one or more SRS resources configured or indicated through one SRI field only correspond to one PTRS port index value, determine one or more SRS resources corresponding to PTRS port indices with a same value or different values and configured or indicated through another SRI field; or in a case that PTRS port index values corresponding to one or more SRS resources configured or indicated through two SRI fields are not unique, determine a PTRS port index value corresponding to one or more SRS resources configured or indicated through each SRI field in a predefined manner; or in a case that PTRS port index values corresponding to one or more SRS resources configured or indicated through two SRI fields are unique, use the PTRS port index value corresponding to one or more SRS resources configured or indicated through each SRI field.

Optionally, different SRS resource sets are associated with a panel, a TRP or a PUSCH transmission occasion on beam information.

Optionally, the processing module 1201 is further configured to determine the DMRS port actually associated with each PTRS based on the association indication between the PTRS and the DMRS port.

Optionally, a type of the PUSCH includes any one of: scheduled PUSCH, grant-free type 1 PUSCH, and grant-free type 2 PUSCH.

In the embodiments of the present disclosure, under the configuration of STxMP, in a case that the PUSCH is scheduled for the NCB SDM transmission, the terminal device determines the PTRS transmission parameter based on the sent configuration and the predetermined rule, and transmits the PTRS based on the PTRS transmission parameter. As a result, it is able to implement the reliable transmission of the PTRS, and provide a condition for accurately estimating a CPE under the STxMP configuration.

It should be appreciated that, the communication apparatus 1200 may be a network device, or an apparatus in the network device, or an apparatus capable of being used in combination with the network device.

The communication apparatus 1200 is used at a network device side. The processing module 1201 is configured to, under a configuration of uplink STxMP of a terminal device, in a case that a PUSCH is scheduled for non-codebook-based SDM transmission, determine an uplink PTRS transmission parameter of the terminal device based on configuration information sent to the terminal device. The PTRS transmission parameter includes a number of actual transmission ports of the PTRS and a DMRS port actually associated with each PTRS port, and different PTRS ports are associated with different DMRS ports. The transceiving module 1202 is configured to receive the PTRS sent by the terminal device based on the uplink PTRS transmission parameter.

Optionally, the configuration information at least includes a maximum number of PTRS ports, an association indication between the PTRS and the DMRS port, and DMRS port configuration information.

Optionally, one piece of the maximum number of PTRS ports is configured, and the one piece of the maximum number of PTRS ports is used for STRP transmission, SFN transmission and SDM transmission.

Optionally, two pieces of the maximum number of PTRS ports are configured, one of the two pieces of the maximum number of PTRS ports is used for STRP transmission, the other of the two pieces of the maximum number of PTRS ports is used for MTRP transmission under STxMP, and the MTRP transmission under STxMP at least includes SFN transmission and SDM transmission.

Optionally, at least three pieces of the maximum number of PTRS ports are configured, one of the at least three pieces of the maximum number of PTRS ports is used for STRP transmission, another of the at least three pieces of the maximum number of PTRS ports is used for SDM transmission, and another of the at least three pieces of the maximum number of PTRS ports is used for SFN transmission.

Optionally, the maximum number of PTRS ports is configured as at least one of: in a case that a scheduling mode is STRP transmission, a maximum value of the maximum number of PTRS ports is 2; in a case that a scheduling mode is SFN transmission of MTRP transmission, the maximum value of the maximum number of PTRS ports is 1 or 2; and in a case that a scheduling mode is SDM transmission of the MTRP transmission, the maximum value of the maximum number of PTRS ports is 2.

Optionally, the processing module 1201 is further configured to: in a case that the scheduling mode is the STRP transmission, determine that the number of the actual transmission ports of the PTRS is 1 or 2, the number of the actual transmission ports of the PTRS being determined based on a number of PTRS port indices values corresponding to one or more SRS resources configured or indicated through a SRI field, and the one or more SRS resources being included in a SRS resource set associated with the SRI field; and determine that DMRS ports corresponding to one or more SRS resources in the associated SRS resource set corresponding to a same PTRS port index value share a same PTRS port.

Optionally, the processing module 1201 is further configured to: in a case that the scheduling mode is the SDM transmission of the MTRP transmission, determine that the number of the actual transmission ports of the PTRS is 2, a PTRS port index value corresponding to one or more first SRS resources configured or indicated through a first SRI field being a predefined first index value by default, a PTRS port index value corresponding to one or more second SRS resources configured or indicated through a second SRI field being a predefined second index value by default, the one or more first SRS resources being included in a first SRS resource set associated with the first SRI field, and the one or more second SRS resources are included in a second SRS resource set associated with the second SRI field; and determine that DMRS ports corresponding to one or more SRS resources in the first SRS resource set corresponding to the first index value share a PTRS port corresponding to the first index value, and DMRS ports corresponding to one or more SRS resources in the second SRS resource set corresponding to the second index value share a PTRS port corresponding to the second index value.

Optionally, the processing module 1201 is further configured to: in a case that the scheduling mode is the SDM transmission of the MTRP transmission, determine that the number of the actual transmission ports of the PTRS is 2, and determine one or more SRS resources corresponding to a same PTRS port index and configured or indicated through a same SRI field and PTRS port indices with different values corresponding to one or more SRS resources in different SRS resource sets configured or indicated through different SRI fields based on a configuration of the network device; and determine that DMRS ports corresponding to one or more SRS resources in each SRS resource set corresponding to a same PTRS port index value share a same PTRS port, and DMRS ports corresponding to SRS resources in different SRS resource sets corresponding to different PTRS port indices values share different PTRS ports.

Optionally, the processing module 1201 is further configured to: in a case that one or more SRS resources configured or indicated through one SRI field only correspond to one PTRS port index, determine one or more SRS resources corresponding to another PTRS port index and configured or indicated through another SRI field; or in a case that PTRS port index values corresponding to one or more SRS resources configured or indicated through two SRI fields are not unique, determine a PTRS port index value corresponding to one or more SRS resources configured or indicated through each SRI field in a predefined manner; or in a case that PTRS port index values corresponding to one or more SRS resources configured or indicated through two SRI fields are unique, use the PTRS port index value corresponding to one or more SRS resources configured or indicated through each SRI field.

Optionally, the processing module 1201 is further configured to: in a case that the scheduling mode is the SDM transmission of the MTRP transmission, determine that the number of the actual transmission ports of the PTRS is 2, and determine one or more SRS resources corresponding to a same PTRS port index value and configured or indicated through a same SRI field and PTRS port indices with a same value or different values corresponding to one or more SRS resources in different SRS resource sets configured or indicated through different SRI fields based on a configuration of the network device; and determine that DMRS ports corresponding to one or more SRS resources in each SRS resource set corresponding to a same PTRS port index value share a same PTRS port, and DMRS ports corresponding to SRS resources in different SRS resource sets corresponding to PTRS port indices with a same value or different values share a same PTRS port or different PTRS ports.

Optionally, the processing module 1201 is further configured to: in a case that one or more SRS resources configured or indicated through one SRI field only correspond to one PTRS port index value, determine one or more SRS resources corresponding to PTRS port indices with a same value or different values and configured or indicated through another SRI field; or in a case that PTRS port index values corresponding to one or more SRS resources configured or indicated through two SRI fields are not unique, determine a PTRS port index value corresponding to one or more SRS resources configured or indicated through each SRI field in a predefined manner; or in a case that PTRS port indices values corresponding to one or more SRS resources configured or indicated through two SRI fields are unique, use the PTRS port index value corresponding to one or more SRS resources configured or indicated through each SRI field.

Optionally, different SRS resource sets are associated with a panel, a TRP or a PUSCH transmission occasion on beam information.

Optionally, the processing module 1201 is further configured to determine the DMRS port actually associated with each PTRS based on the association indication between the PTRS and the DMRS port.

Optionally, a type of the PUSCH includes any one of: scheduled PUSCH, grant-free type 1 PUSCH, and grant-free type 2 PUSCH.

In the embodiments of the present disclosure, under the configuration of STxMP, in a case that the PUSCH is scheduled for the NCB SDM transmission, the network device determines the PTRS transmission parameter based on the sent configuration and the predetermined rule, and transmits the PTRS based on the PTRS transmission parameter. As a result, it is able to implement the reliable transmission of the PTRS, and provide a condition for accurately estimating a CPE under the STxMP configuration.

FIG. 13 is a schematic view showing another communication apparatus provided in an embodiment of the present disclosure, the communication apparatus 1300 may be a terminal device, or a network device, or a chip, a chip system or a processor which supports the terminal device to implement the above-mentioned method, or a chip, a chip system or a processor which supports the network device to implement the above-mentioned method. The communication apparatus is used to implement the method described in the above method embodiments, and the implementation thereof may refer to that in the above method embodiments.

The communication apparatus 1300 may include one or more processors 1301. The processor 1301may be a general-purpose processor or special-purpose processor, e.g., a baseband processor or a central processing unit. The baseband processor is configured to process a communication protocol as well as communication data, and the central processing unit is configured to control the communication apparatus (e.g., a base station, a baseband chip, a terminal, a terminal device chip, a Distributed Unit (DU) or a Centralized Unit (CU)), execute a computer program, and process data in the computer program.

Optionally, the communication apparatus 1300 further includes one or more memories 1302 storing therein a computer program 1304. The computer program 1304 is executed by the processor 1301, so that the communication apparatus 1300 executes the method in the above method embodiments. Optionally, the memory 1302 further stores therein data. The communication apparatus 1300 is arranged independent of, or integrated with, the memory 1302.

Optionally, the communication apparatus 1300 further includes a transceiver 1305 and an antenna 1306. The transceiver 1305 is also called as a transceiver unit, a transceiver machine or a transceiver circuit, and it is configured to achieve a transmission function and a reception function. The transceiver 1305 includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the communication apparatus 1300 further includes one or more interface circuits 1307. The interface circuit 1307 is configured to receive a code instruction and transmit it to the processor 1301. The processor 1301 executes the code instruction, so that the communication apparatus 1300 implements the method described in the above method embodiments.

The transceiver 1305 in the communication apparatus 1300 is used to implement a sending step and a receiving step in the above method embodiments.

During the implementation, the processor 1301 may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit/or transfer signals.

During the implementation, the processor 1301 stores therein a computer program 1303, and the computer program 1303 is executed by the processor 1301, so that the communication apparatus 1300 implements the method described in the above method embodiments. The computer program 1303 may be programmed in the processor 1301, and in this case, the processor 1301 may be implemented through hardware.

During the implementation, the communication apparatus 1300 includes a circuit for implementing the above-mentioned transmission, reception or communication function. The processor and the transceiver described in the embodiments of the present disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus mentioned hereinabove may be a network device or a terminal device, but the scope of the communication apparatus is not limited thereto. In addition, a structure of the communication apparatus is limited to that in FIG. 13. The communication apparatus may be an independent device, or a part of a large device. For example, the communication apparatus may be: (1) an independent IC, chip, chip system or chip sub-system; (2) a set of one or more ICs (optionally, the IC set also includes a memory member for storing therein data and a computer program; (3) an ASIC, e.g., a Modem; (4) a module capable of being embedded into the other device; (5) a receiver, a terminal device, a smart terminal device, a cellular phone, a wireless device, a handheld device, a mobile unit, a vehicle-mounted device, a network device, a cloud device, an artificial intelligence device, etc.; or (6) the other device.

In a case that the communication apparatus is a chip or a chip system, FIG. 14 is a schematic view of the chip according to an embodiment of the present disclosure. As shown in FIG. 14, the chip includes a processor 1401 and an interface 1403. There may exist one or more processors 1401, and more than one interface 1403.

The interface 1402 in the chip is configured to implement a receiving step and a sending step in the above method embodiments.

Optionally, the chip further includes a memory 1403 for storing therein necessary computer programs and data.

It should be appreciated that, various illustrative logical blocks and steps listed in the embodiments of the present disclosure may be implemented through electronic hardware, computer software, or a combination thereof. Whether these functions are implemented through hardware or software depends on design requirements on an entire system and specific applications. For each specific application, various methods are used to achieve the function, which however shall not be construed as going beyond the scope of the present disclosure.

The present disclosure further provides in some embodiments a readable storage medium storing therein an instruction. The instruction is executed by a computer so as to achieve the functions in any of the above-mentioned method embodiments.

The present disclosure further provides in some embodiments a computer program product. The computer program product is executed by a computer so as to achieve the functions in any of the above-mentioned method embodiments.

In the above-mentioned embodiments of the present disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the present disclosure or indicating any sequence.

The expression "at least one" is used to indicate one or more, e.g., two, three, four or more, which will not be particularly defined herein. In the embodiments of the present disclosure, for technical features of a same kind, the words "first", "second", "third", "A", "B", "C" and "D" are used to differentiate these technical features, without indicating any sequence or sizes thereof.

The correspondence shown in each table in the present disclosure may be configured or predefined. Values of information in each table are for illustrative purposes only, and any other values may also be configured, which will not be particularly defined herein. In a case of configuring the correspondence between the information and parameters, it is not necessary to configure all the correspondences in the table. For example, in the table in the embodiments of the present disclosure, correspondences shown in some rows may not be configured. For another example, appropriate deformation or adjustment may be performed based on the table, e.g., splitting or combination. A name of each parameter in each table may use the other name capable of being understood by the communication apparatus, and a value of the parameter or a presentation mode thereof may also use that capable of being understood by the communication apparatus. During the implementation of each table, the other data structure may also be used, e.g., array, queue, container, stack, linear table, pointer, linked list, tree, map, structure, class, heap, or hash table.

## Claims

1. A transmission method for an uplink Phase Tracking Reference Signal (PTRS), executed by a terminal device, comprising:
under a configuration of uplink Simultaneous Transmission from Multiple Panels (STxMP), in a case that a network device schedules a Physical Uplink Shared Channel (PUSCH) for non-codebook-based Space Division Multiplexing (SDM) transmission, determining an uplink PTRS transmission parameter based on received configuration information, wherein the PTRS transmission parameter comprises a number of actual transmission ports of the PTRS and a Demodulation Reference Signal (DMRS) port actually associated with each PTRS port, and different PTRS ports are associated with different DMRS ports; and
sending the PTRS to the network device based on the uplink PTRS transmission parameter.

2. The transmission method according to claim 1, wherein
the configuration information at least comprises a maximum number of PTRS ports, an association indication between the PTRS and the DMRS port, and DMRS port configuration information.

3. The transmission method according to claim 2, wherein
one piece of the maximum number of PTRS ports is configured,
wherein the one piece of the maximum number of PTRS ports is used for Single-Transmission Reception Point (STRP) transmission, Single Frequency Network (SFN) transmission and SDM transmission.

4. The transmission method according to claim 2, wherein
two pieces of the maximum number of PTRS ports are configured, wherein one of the two pieces of the maximum number of PTRS ports is used for STRP transmission, the other of the two pieces of the maximum number of PTRS ports is used for Multi-TRP (MTRP) transmission under STxMP, and the MTRP transmission under STxMP at least comprises SFN transmission and SDM transmission.

5. The transmission method according to claim 2, wherein
at least three pieces of the maximum number of PTRS ports are configured,
wherein one of the at least three pieces of the maximum number of PTRS ports is used for STRP transmission, another of the at least three pieces of the maximum number of PTRS ports is used for SDM transmission, and another of the at least three pieces of the maximum number of PTRS ports is used for SFN transmission.

6. The transmission method according to claim 2, wherein the maximum number of PTRS ports is configured as at least one of:
in a case that a scheduling mode is STRP transmission, a maximum value of the maximum number of PTRS ports is 2;
in a case that a scheduling mode is SFN transmission of MTRP transmission , the maximum value of the maximum number of PTRS ports is 1 or 2; and
in a case that a scheduling mode is SDM transmission of the MTRP transmission, the maximum value of the maximum number of PTRS ports is 2.

7. The transmission method according to any one of claims 1 to 6, wherein the determining the uplink PTRS transmission parameter based on the received configuration information comprises:
in a case that the scheduling mode is the STRP transmission, determining that the number of the actual transmission ports of the PTRS is 1 or 2, wherein the number of the actual transmission ports of the PTRS is determined based on a number of PTRS port index values corresponding to one or more Sounding Reference Signal (SRS) resources configured or indicated through a SRS Resource Indicator (SRI) field, and the one or more SRS resources are comprised in a SRS resource set associated with the SRI field; and
determining that DMRS ports corresponding to one or more SRS resources in the associated SRS resource set corresponding to a same PTRS port index value share a same PTRS port.

8. The transmission method according to any one of claims 1 to 6, wherein the determining the uplink PTRS transmission parameter based on the received configuration information comprises:
in a case that the scheduling mode is the SDM transmission of the MTRP transmission, determining that the number of the actual transmission ports of the PTRS is 2, wherein a PTRS port index value corresponding to one or more first SRS resources configured or indicated through a first SRI field is a predefined first index value by default, a PTRS port index value corresponding to one or more second SRS resources configured or indicated through a second SRI field is a predefined second index value by default, the one or more first SRS resources are comprised in a first SRS resource set associated with the first SRI field, and the one or more second SRS resources are comprised in a second SRS resource set associated with the second SRI field; and
determining that DMRS ports corresponding to one or more SRS resources in the first SRS resource set corresponding to the first index value share a PTRS port corresponding to the first index value, and DMRS ports corresponding to one or more SRS resources in the second SRS resource set corresponding to the second index value share a PTRS port corresponding to the second index value.

9. The transmission method according to any one of claims 1 to 6, wherein the determining the uplink PTRS transmission parameter based on the received configuration information comprises:
in a case that the scheduling mode is the SDM transmission of the MTRP transmission, determining that the number of the actual transmission ports of the PTRS is 2, and determining one or more SRS resources corresponding to a same PTRS port index and configured or indicated through a same SRI field and PTRS port indices with different values corresponding to one or more SRS resources in different SRS resource sets configured or indicated through different SRI fields based on a configuration of the network device; and
determining that DMRS ports corresponding to one or more SRS resources in each SRS resource set corresponding to a same PTRS port index value share a same PTRS port, and DMRS ports corresponding to SRS resources in different SRS resource sets corresponding to different PTRS port index values share different PTRS ports.

10. The transmission method according to claim 9, wherein the determining one or more SRS resources corresponding to a same PTRS port index and configured or indicated through a same SRI field and PTRS port indices with different values corresponding to one or more SRS resources in different SRS resource sets configured or indicated through different SRI fields comprises:
in a case that one or more SRS resources configured or indicated through one SRI field only correspond to one PTRS port index value, determining one or more SRS resources corresponding to another PTRS port index value and configured or indicated through another SRI field; or
in a case that PTRS port index values corresponding to one or more SRS resources configured or indicated through two SRI fields are not unique, determining a PTRS port index value corresponding to one or more SRS resources configured or indicated through each SRI field in a predefined manner; or
in a case that PTRS port index values corresponding to one or more SRS resources configured or indicated through two SRI fields are unique, using the PTRS port index value corresponding to one or more SRS resources configured or indicated through each SRI field.

11. The transmission method according to any one of claims 1 to 6, wherein the determining the uplink PTRS transmission parameter based on the received configuration information comprises:
in a case that the scheduling mode is the SDM transmission of the MTRP transmission, determining that the number of the actual transmission ports of the PTRS is 2, and determining one or more SRS resources corresponding to a same PTRS port index value and configured or indicated through a same SRI field and PTRS port indices with a same value or different values corresponding to one or more SRS resources in different SRS resource sets configured or indicated through different SRI fields based on a configuration of the network device; and
determining that DMRS ports corresponding to one or more SRS resources in each SRS resource set corresponding to a same PTRS port index value share a same PTRS port, and DMRS ports corresponding to SRS resources in different SRS resource sets corresponding to PTRS port indices with a same value or different values share a same PTRS port or different PTRS ports.

12. The transmission method according to claim 11, wherein the determining one or more SRS resources corresponding to a same PTRS port index value and configured or indicated through a same SRI field and PTRS port indices with a same value or different values corresponding to one or more SRS resources in different SRS resource sets configured or indicated through different SRI fields comprises:
in a case that one or more SRS resources configured or indicated through one SRI field only correspond to one PTRS port index value, determining one or more SRS resources corresponding to PTRS port indices with a same value or different values and configured or indicated through another SRI field; or
in a case that PTRS port index values corresponding to one or more SRS resources configured or indicated through two SRI fields are not unique, determining a PTRS port index value corresponding to one or more SRS resources configured or indicated through each SRI field in a predefined manner; or
in a case that PTRS port index values corresponding to one or more SRS resources configured or indicated through two SRI fields are unique, using the PTRS port index value corresponding to one or more SRS resources configured or indicated through each SRI field.

13. The transmission method according to any one of claims 7 to 12, wherein different SRS resource sets are associated with a panel, a TRP or a PUSCH transmission occasion on beam information.

14. The transmission method according to any one of claims 7 to 12, wherein the determining the uplink PTRS transmission parameter based on the received configuration information further comprises:
determining the DMRS port actually associated with each PTRS based on the association indication between the PTRS and the DMRS port.

15. The transmission method according to any one of claims 1 to 14, wherein a type of the PUSCH comprises any one of: scheduled PUSCH, grant-free type 1 PUSCH, and grant-free type 2 PUSCH.

16. A transmission method for an uplink PTRS, executed by a network device, comprising:
under a configuration of uplink STxMP of a terminal device, in a case that a PUSCH is scheduled for non-codebook-based SDM transmission, determining an uplink PTRS transmission parameter of the terminal device based on configuration information sent to the terminal device, wherein the PTRS transmission parameter comprises a number of actual transmission ports of the PTRS and a DMRS port actually associated with each PTRS port, and different PTRS ports are associated with different DMRS ports; and
receiving the PTRS sent by the terminal device based on the uplink PTRS transmission parameter.

17. The transmission method according to claim 16, wherein the configuration information at least comprises a maximum number of PTRS ports, an association indication between the PTRS and the DMRS port, and DMRS port configuration information.

18. The transmission method according to claim 17, wherein
one piece of the maximum number of PTRS ports is configured, wherein the one piece of the maximum number of PTRS ports is used for STRP transmission, SFN transmission and SDM transmission.

19. The transmission method according to claim 17, wherein
two pieces of the maximum number of PTRS ports are configured, wherein one of the two pieces of the maximum number of PTRS ports is used for STRP transmission, the other of the two pieces of the maximum number of PTRS ports is used for MTRP transmission under STxMP, and the MTRP transmission under STxMP at least comprises SFN transmission and SDM transmission.

20. The transmission method according to claim 17, wherein
at least three pieces of the maximum number of PTRS ports are configured,
wherein one of the at least three pieces of the maximum number of PTRS ports is used for STRP transmission, another of the at least three pieces of the maximum number of PTRS ports is used for SDM transmission, and another of the at least three pieces of the maximum number of PTRS ports is used for SFN transmission.

21. The transmission method according to claim 17, wherein the maximum number of PTRS ports is configured as at least one of:
in a case that a scheduling mode is STRP transmission, a maximum value of the maximum number of PTRS ports is 2;
in a case that a scheduling mode is SFN transmission of MTRP transmission, the maximum value of the maximum number of PTRS ports is 1 or 2; and
in a case that a scheduling mode is SDM transmission of the MTRP transmission, the maximum value of the maximum number of PTRS ports is 2.

22. The transmission method according to any one of claims 16 to 21, wherein the determining the uplink PTRS transmission parameter of the terminal device based on the configuration information sent to the terminal device comprises:
in a case that the scheduling mode is the STRP transmission, determining that the number of the actual transmission ports of the PTRS is 1 or 2, wherein the number of the actual transmission ports of the PTRS is determined based on a number of PTRS port indices values corresponding to one or more SRS resources configured or indicated through a SRI field, and the one or more SRS resources are comprised in a SRS resource set associated with the SRI field; and
determining that DMRS ports corresponding to one or more SRS resources in the associated SRS resource set corresponding to a same PTRS port index value share a same PTRS port.

23. The transmission method according to any one of claims 16 to 21, wherein the determining the uplink PTRS transmission parameter of the terminal device based on the configuration information sent to the terminal device comprises:
in a case that the scheduling mode is the SDM transmission of the MTRP transmission, determining that the number of the actual transmission ports of the PTRS is 2, wherein a PTRS port index value corresponding to one or more first SRS resources configured or indicated through a first SRI field is a predefined first index value by default, a PTRS port index value corresponding to one or more second SRS resources configured or indicated through a second SRI field is a predefined second index value by default, the one or more first SRS resources are comprised in a first SRS resource set associated with the first SRI field, and the one or more second SRS resources are comprised in a second SRS resource set associated with the second SRI field; and
determining that DMRS ports corresponding to one or more SRS resources in the first SRS resource set corresponding to the first index value share a PTRS port corresponding to the first index value, and DMRS ports corresponding to one or more SRS resources in the second SRS resource set corresponding to the second index value share a PTRS port corresponding to the second index value.

24. The transmission method according to any one of claims 16 to 21, wherein the determining the uplink PTRS transmission parameter of the terminal device based on the configuration information sent to the terminal device comprises:
in a case that the scheduling mode is the SDM transmission of the MTRP transmission, determining that the number of the actual transmission ports of the PTRS is 2, and determining one or more SRS resources corresponding to a same PTRS port index and configured or indicated through a same SRI field and PTRS port indices with different values corresponding to one or more SRS resources in different SRS resource sets configured or indicated through different SRI fields based on a configuration of the network device; and
determining that DMRS ports corresponding to one or more SRS resources in each SRS resource set corresponding to a same PTRS port index value share a same PTRS port, and DMRS ports corresponding to SRS resources in different SRS resource sets corresponding to different PTRS port indices values share different PTRS ports.

25. The transmission method according to claim 24, wherein the determining one or more SRS resources corresponding to a same PTRS port index and configured or indicated through a same SRI field and PTRS port indices with different values corresponding to one or more SRS resources in different SRS resource sets configured or indicated through different SRI fields comprises:
in a case that one or more SRS resources configured or indicated through one SRI field only correspond to one PTRS port index, determining one or more SRS resources corresponding to another PTRS port index and configured or indicated through another SRI field; or
in a case that PTRS port index values corresponding to one or more SRS resources configured or indicated through two SRI fields are not unique, determining a PTRS port index value corresponding to one or more SRS resources configured or indicated through each SRI field in a predefined manner; or
in a case that PTRS port index values corresponding to one or more SRS resources configured or indicated through two SRI fields are unique, using the PTRS port index value corresponding to one or more SRS resources configured or indicated through each SRI field.

26. The transmission method according to any one of claims 16 to 21, wherein the determining the uplink PTRS transmission parameter of the terminal device based on the configuration information sent to the terminal device comprises:
in a case that the scheduling mode is the SDM transmission of the MTRP transmission, determining that the number of the actual transmission ports of the PTRS is 2, and determining one or more SRS resources corresponding to a same PTRS port index value and configured or indicated through a same SRI field and PTRS port indices with a same value or different values corresponding to one or more SRS resources in different SRS resource sets configured or indicated through different SRI fields based on a configuration of the network device; and
determining that DMRS ports corresponding to one or more SRS resources in each SRS resource set corresponding to a same PTRS port index value share a same PTRS port, and DMRS ports corresponding to SRS resources in different SRS resource sets corresponding to PTRS port indices with a same value or different values share a same PTRS port or different PTRS ports.

27. The transmission method according to claim 26, wherein the determining one or more SRS resources corresponding to a same PTRS port index value and configured or indicated through a same SRI field and PTRS port indices with a same value or different values corresponding to one or more SRS resources in different SRS resource sets configured or indicated through different SRI fields comprises:
in a case that one or more SRS resources configured or indicated through one SRI field only correspond to one PTRS port index value, determining one or more SRS resources corresponding to PTRS port indices with a same value or different values and configured or indicated through another SRI field; or
in a case that PTRS port index values corresponding to one or more SRS resources configured or indicated through two SRI fields are not unique, determining a PTRS port index value corresponding to one or more SRS resources configured or indicated through each SRI field in a predefined manner; or
in a case that PTRS port indices values corresponding to one or more SRS resources configured or indicated through two SRI fields are unique, using the PTRS port index value corresponding to one or more SRS resources configured or indicated through each SRI field.

28. The transmission method according to any one of claims 22 to 27, wherein different SRS resource sets are associated with a panel, a TRP or a PUSCH transmission occasion on beam information.

29. The transmission method according to any one of claims 22 to 27, wherein the determining the uplink PTRS transmission parameter of the terminal device based on the configuration information sent to the terminal device further comprises:
determining the DMRS port actually associated with each PTRS based on the association indication between the PTRS and the DMRS port.

30. The transmission method according to any one of claims 16 to 29, wherein a type of the PUSCH comprises any one of:
scheduled PUSCH, grant-free type 1 PUSCH, and grant-free type 2 PUSCH.

31. A communication apparatus, comprising:
a processing module configured to, under a configuration of uplink STxMP, in a case that a network device schedules a PUSCH for non-codebook-based SDM transmission, determine an uplink PTRS transmission parameter based on received configuration information, wherein the PTRS transmission parameter comprises a number of actual transmission ports of the PTRS and a DMRS port actually associated with each PTRS port, and different PTRS ports are associated with different DMRS ports; and
a transceiving module configured to send the PTRS to the network device based on the uplink PTRS transmission parameter.

32. A communication apparatus, comprising:
a processing module configured to, under a configuration of uplink STxMP of a terminal device, in a case that a PUSCH is scheduled for non-codebook-based SDM transmission, determine an uplink PTRS transmission parameter of the terminal device based on configuration information sent to the terminal device, wherein the PTRS transmission parameter comprises a number of actual transmission ports of the PTRS and a DMRS port actually associated with each PTRS port, and different PTRS ports are associated with different DMRS ports; and
a transceiving module configured to receive the PTRS sent by the terminal device based on the uplink PTRS transmission parameter.

33. A communication apparatus, comprising a processor and a memory, wherein the memory is configured to store therein a computer program, and the processor is configured to execute the computer program in the memory to implement the transmission method according to any one of claims 1 to 15 or the transmission method according to any one of claims 16 to 30.

34. A communication system, comprising a terminal device and a network device,
wherein the terminal device is configured to execute the transmission method according to any one of claims 1 to 15, and the network device is configured to execute the transmission method according to any one of claims 16 to 30.

35. A computer-readable storage medium storing therein an instruction, wherein the instruction is executed to implement the transmission method according to any one of claims 1 to 15 or the transmission method according to any one of claims 16 to 30.
